# EUROPÄISCHE PATENTSCHRIFT

(11) **EP 1 984 556 B1**
(45) Veröffentlichungstag und Bekanntmachung des Hinweises auf die Patenterteilung: **05.10.2011**
(21) Anmeldenummer: 07704075.6
(22) Anmeldetag: 23.01.2007
(51) Int. Cl.: C09D 11/00, D06M 15/227, D06M 15/233, D06M 15/568, C09D 125/04, D06M 13/148, D06M 15/564, D06M 23/12, D06M 15/263

(54) **VERFAHREN ZUM BEHANDELN VON SUBSTRATEN**
PROCESS FOR TREATING SUBSTRATES
PROCEDE DE TRAITEMENT DE SUBSTRATS

(30) Priorität: 03.02.2006 EP 06101261; 24.03.2006 EP 06111691; 27.10.2006 DE 102006051415
(43) Veröffentlichungstag der Anmeldung: 29.10.2008
(73) Patentinhaber: BASF SE, 67056 Ludwigshafen (DE)
(72) Erfinder: HÄBERLE, Karl, 67346 Speyer (DE); SIEMENSMEYER, Karl, 67227 Frankenthal (DE); NÖRENBERG, Ralf, 67063 Ludwigshafen (DE); ELIZALDE, Oihana, 68159 Mannheim (DE); HECHAVARRIA FONSECA, Maria Teresa, 68642 Bürstadt (DE); REICHERT, Jürgen, 67117 Limburgerhof (DE); STROBEL, Rolf, 72379 Hechingen (DE)
(86) Internationale Anmeldenummer: PCT/EP2007/050640
(87) Internationale Veröffentlichungsnummer: WO 2007/090735

(56) Entgegenhaltungen:
- EP-A1- 0 501 272
- US-A- 4 954 559

## Beschreibung

Die vorliegende Erfindung betrifft ein Verfahren zum Behandeln von textilen Substraten, dadurch gekennzeichnet, dass man mindestens eine wässrige Formulierung einsetzt, die enthält
(A) mindestens ein Bindemittel auf Acrylatbasis, das keine Comonomere einpolymerisiert enthält, die bei Einwirkung von Temperaturen im Bereich von 100 bis 250°C pro Mol ein Äquivalent Formaldehyd abspalten können,
(B) mindestens ein Umsetzungsprodukt von mindestens einem Carbodiimid (C) mit mindestens einem Diol, Triol oder Polyol (D), oder
(C) mindestens ein polymeres Carbodiimid und
(D) mindestens ein Diol, Triol oder Polyol.

Weiterhin betrifft die vorliegende Erfindung wässrige Formulierungen, die zur Durchführung des erfindungsgemäßen Verfahrens geeignet sind, sowie ein Verfahren zur Herstellung der erfindungsgemäßen wässrigen Formulierungen.

Weiterhin betrifft die vorliegende Erfindung textile Substrate, behandelt nach dem erfindungsgemäßen Verfahren.

Viele Substrate wie beispielsweise Textil und Leder bekommen erst nach einer Behandlung die gewünschten Gebrauchseigenschaften. Geeignete Behandlungen können beispielsweise ein Bedrucken, Beschichten oder Färben sein- Dabei sind die Ansprüche an eine gute Behandlung hoch. Die Substrate soll hohe Gebrauchsechtheiten aufweisen, beispielsweise Reibechtheiten, Waschechtheiten und Nassreibechtheiten. Die Behandlung soll Wirk- und Effektstoffe, insbesondere Farbmittel, gut zur Wirkung kommen lassen. Weiterhin soll die Behandlung keine für die Gesundheit nachteiligen Wirkungen haben. Beispielsweise sollen keine gesundheitsgefährdenden Emissionen verursacht werden wie z.B. Formaldehyd. Schließlich soll die Behandlung einfach aufzubringen sein.

Gängige Behandlungsmittel sind bezüglich der vorstehend genannten Eigenschaften noch zu verbessern. Zwar sind Formaldehyd-freie Behandlungsmittel im Grundsatz bekannt, jedoch fehlen im Allgemeinen gute Echtheiten wie Reibechtheit, Waschechtheit und Nassreibechtheit. Auch Farbpermanenz, beispielsweise zu ermitteln durch den Graumaßstab, ist in vielen Fällen noch zu verbessern.

Demgemäß wurde das eingangs definierte Verfahren gefunden.

Das eingangs definierte Verfahren geht aus von mindestens einem textilen Substrat. Unter Textil bzw. textilen Substraten sind im Rahmen der vorliegenden Erfindung Textilfasem, textile Halb- und Fertigfabrikate und daraus hergestellte Fertigwaren zu verstehen, die neben Textilien für die Bekleidungsindustrie beispielsweise auch Teppiche und andere Heimtextilien sowie technischen Zwecken dienende textile Gebilde umfassen. Dazu gehören auch ungeformte Gebilde, weiterhin linienförmige Gebilde wie Bindfäden, Fäden, Garne, Leinen, Schnüre, Seile, Zwirne sowie Körpergebilde wie beispielsweise Filze, Gewebe, Gewirke, Vliesstoffe und Watten. Textilien können natürlichen Ursprungs sein, beispielsweise Baumwolle, Wolle oder Flachs, oder synthetisch, beispielsweise Polyamid, Polyester, modifizierte Polyester, Polyestermischgewebe, Polyamidmischgewebe, Polyacrylnitril, Triacetat, Acetat, Polycarbonat, Polyolefine wie beispielsweise Polyethylen und Polypropylen, Polyvinylchlorid, weiterhin Polyestermikrofasern und Glasfasergewebe. Ganz besonders bevorzugt sind Polyester, Baumwolle und Polyolefine wie beispielsweise Polyethylen und Polypropylen sowie ausgewählte Mischgewebe, gewählt aus Baumwolle-Polyester-Mischgewebe, Polyolefin-Polyester-Mischgewebe und Polyolefin-Baumwolle-Mischgewebe.

Erfindungsgemäß behandelt man textiles Substrat mit mindestens einer wässrigen Formulierung. Dazu bringt man eine oder mehrere wässrige Formulierungen auf das zu behandelnde textile Substrat auf und führt gegebenenfalls weitere Arbeitsschritte durch, beispielsweise vor oder nach dem Aufbringen. In einer anderen Ausführungsform tränkt man textiles Substrat mit erfindungsgemäßer wässriger Formulierung.

Durch das Aufbringen bzw. Tränken können Pigmente (E) oder Wirkstoffe (F) von erfindungsgemäßer wässriger Formulierung überwiegend oder vollständig auf dem textilen Substrat bleiben, sie können aber auch zu einem gewissen Anteil in das textile Substrat eindringen.

In einer bevorzugten Ausführungsform behandelt man dadurch, dass man textiles Substrat mit wässriger Formulierung bedruckt. Zur Durchführung des Bedruckens kann man an sich bekannte Verfahren wie beispielsweise Siebdruckverfahren anwenden.

In einer anderen Ausführungsform der vorliegenden Erfindung behandelt man dadurch, dass man textiles Substrat mit wässriger Formulierung färbt. Zur Durchführung des Färbens kann man an sich bekannte Verfahren wie beispielsweise Klotz- und Ausziehverfahren anwenden.

In einer anderen Ausführungsform der vorliegenden Erfindung behandelt man dadurch, dass man textiles Substrat mit wässriger Formulierung beschichtet.

Zur Durchführung des erfindungsgemäßen Verfahrens beschichtet man unter Einsatz von mindestens einer wässrigen Formulierung, die enthält:
(A) mindestens ein Bindemittel auf Acrylatbasis, das keine Comonomere einpolymerisiert enthält, die bei Einwirkung von Temperaturen im Bereich von 100 bis 250°C pro Mol ein Äquivalent Formaldehyd abspalten können, im Rahmen der vorliegenden Erfindung auch kurz als Bindemittel (A) bezeichnet,
(B) mindestens ein Umsetzungsprodukt von mindestens einem Carbodiimid (C) mit mindestens einem Diol, Triol oder Polyol (D), oder
(C) mindestens ein polymeres Carbodiimid, im Rahmen der vorliegenden Erfindung auch als Carbodiimid (C) bezeichnet, und
(D) mindestens ein Diol, Triol oder Polyol, im Rahmen der vorliegenden Erfindung auch kurz als Diol (D), Triol (D) oder Polyol (D) oder als Diol, Triol oder Polyol (D) bezeichnet.

Bindemittel (A) umfasst bzw. betrifft keine solchen Bindemittel, die Comonomere einpolymerisiert enthalten, die beispielsweise N-Methylol(meth)acrylamid einpolymerisiert enthalten. Bindemittel (A) umfasst bzw. betrifft ferner keine N-Methylolharnstoff-Derivate.

Im erfindungsgemäßen Verfahren eingesetzte wässrige Formulierung enthält somit üblicherweise kein Bindemittel, das Comonomer einpolymerisiert enthält, welches bei Einwirkung von Temperaturen im Bereich von 100 bis 250°C oder darunter pro Mol ein Äquivalent Formaldehyd abspalten kann.

Unter Bindemittel (A) auf Acrylatbasis werden im Rahmen der vorliegenden Erfindung Copolymerisate verstanden, die durch vorzugsweise radikalische Copolymerisation von mindestens zwei Comonomeren erhalten werden, von denen mindestens eines gewählt wird aus (Meth)acrylsäure und (Meth)acrylaten, beispielsweise (Meth)acrylsäure-C₁-C₂₀-alkylestern, bevorzugt (Meth)acrylsäure-C1-C10-alkylestern, und die vorzugsweise mindestens 50 Gew.-% von Bindemittel (A) ausmachen.

In einer Ausführungsform der vorliegenden Erfindung wird Bindemittel (A) gewählt aus Copolymeren, die als Comonomer (Meth)acrylsäure, Comonomer mit einer Epoxidgruppe im Molekül wie beispielsweise Glycidyl(meth)acrylat, ω-C₂-C₁₀-Hydroxyalkyl(meth)acrylat oder (Meth)acrylsäureester von Alkoholen der allgemeinen Formel I 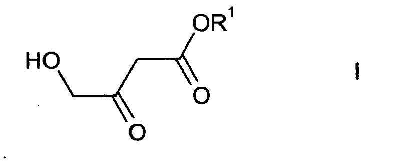 einpolymerisiert enthalten, wobei
- R¹: gewählt wird aus verzweigtem und vorzugsweise unverzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt unverzweigtes C₁-C₄-Alkyl wie Methyl, Ethyl, n-Propyl und n-Butyl.

Als Poly(meth)acrylate im Sinne der vorliegenden Erfindung sind Copolymere von einem oder mehreren C₁-C₁₀-Alkylestern von (Meth)acrylsäure genannt, die beispielsweise (Meth)acrylsäure, Glycidyl(meth)acrylat oder C₂-C₁₀-Hydroxyalkyl(meth)-acrylat und gegebenenfalls ein oder mehrere weitere Comonomere einpolymerisiert enthalten können. Als weitere Comonomere seien beispielhaft Vinylaromaten wie α-Methylstyrol, para-Methylstyrol und insbesondere Styrol, weiterhin (Meth)acrylamid, Vinylchlorid, (Meth)acrylnitril genannt.

Beispiele für besonders geeignete C₁-C₁₀-Alkylester von (Meth)acrylsäure sind Methyl(meth)acrylat, Ethyl(meth)acrylat, n-Propyl(meth)acrylat, Isopropyl(meth)acrylat, n-Butyl(meth)acrylat, n-Hexyl-(meth)acrylat, 2-Ethylhexyl(meth)acrylat, n-Decyl(meth)-acrylat

Beispiele für besonders geeignete ω-Hydroxy-C₂-C₁₀-alkylenester von (Meth)acrylsäure sind insbesondere ω-Hydroxy-C₂-C₁₀-(meth)acrylate wie 6-Hydroxyhexyl(meth)acrylat, 4-Hydroxybutyl(meth)acrylat, 3-Hydroxypropyl(meth)acrylat und insbesondere 2-Hydro-xyethyl(meth)acrylat.

In einer bevorzugten Variante werden Bindemittel (A) aus solchen Poly(meth)acrylaten gewählt, die Copolymere von einem oder mehreren C₁-C₁₀-Alkylestern von (Meth)acrylsäure und (Meth)acrylsäure und mindestens ein Comonomer, gewählt aus Glycidyl-(meth)acrylat und C₂-C₁₀-Hydroxyalkyl(meth)-acrylat einpolymerisiert enthalten, dazu gegebenenfalls ein oder mehrere weitere Comonomere.

Bindemittel (A) können ein Molekulargewicht Mₙ im Bereich von 5.000 bis 1.000.000 g/mol haben.

Bindemittel (A) kann man vorzugsweise durch radikalische (Co)polymerisation der entsprechenden Comonomeren herstellen, bevorzugt durch radikalische Emulsionscopolymerisation, die im Rahmen der vorliegenden Erfindung auch vereinfachend als radikalische Emulsionspolymerisation bezeichnet wird.

Wünscht man in erfindungsgemäß eingesetzter wässriger Formulierung ein Bindemittel (A) einzusetzen, das (Meth)acrylsäure einpolymerisiert enthält, so können die Carboxylgruppen der einpolymerisierten (Meth)acrylsäure in freier Form oder in vollständig oder partiell neutralisierter Form vorliegen, beispielsweise in mit Alkali, mit Ammoniak oder mit Amin vollständig oder partiell neutralisierter Form. Besonders geeignete Amine sind beispielsweise tertiäre Amine, z.B. (C₁-C₄-Alkyl)₃N, insbesondere Triethylamin, und Alkanolamine wie beispielsweise Ethanolamin, Diethanolamin, Triethanolamin, N-Methyl-ethanolamin, N,N-Dimethylethanolamin und N-(n-Butyl)ethanolamin.

Bindemittel (A) fällt vorzugsweise in Form sphärischer Partikel an, die in Wasser dispergiert sind. Die sphärischen Partikel können beispielsweise einen mittleren Durchmesser im Bereich von 10 nm bis 10 µm aufweisen, bevorzugt 20 nm bis 1 µm.

Im erfindungsgemäßen Verfahren eingesetzte wässrige Formulierung kann weiterhin mindestens ein Umsetzungsprodukt (B) enthalten, das durch Umsetzung von mindestens einem Carbodiimid (C) mit mindestens einem Diol, Triol oder Polyol (D) erhältlich ist. Derartige Umsetzungsprodukte werden im Rahmen der vorliegenden Erfindung auch kurz als Umsetzungsprodukt (B) bezeichnet.

Carbodiimid (C) welches jedoch nicht unter das Verfahren gemäß Anspruch 1 fällt, kann beispielsweise die Formel II haben 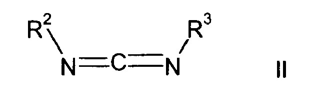
wobei R² und R³ verschieden oder gleich sein können und gewählt aus
C₁-C₂₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, n-Dodecyl, iso-Dodecyl, n-Tetradecyl, n-Hexadecyl, n-Octadecyl, n-Eicosyl; bevorzugt C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decylbesonders bevorzugt C₁-C₄-Alkyl wie Methyl, Ethyl, n-Propyl, iso-Propyl, n-Butyl, iso-Butyl, sec.-Butyl und tert.-Butyl;
C₃-C₂₀-Cycloalkyl, monocyclisch oder bicyclisch, unsubstituiert oder substituiert mit beispielsweise C₁-C₆-Alkyl oder mit Isocyanat, wie Cyclopropyl, Cyclobutyl, Cyclopentyl, Cyclohexyl, Cycloheptyl, Cyclooctyl, 2,5-Dimethylcyclopentyl, 2,6-Dimethylcyclohexyl, Methyl-C₅-C₇-cycloalkyl, Isocyanatocyclohexyl, Methyl-[isocyanato-C₅-C₇-cycloalkyl],
C₆-C₁₄-Aryl, unsubstituiert oder ein- oder mehrfach substituiert mit beispielsweise C₁-C₆-Alkyl oder mit Isocyanat oder mit Isocyanato-C₁-C₆-Alkyl, insbesondere mit C(CH₃)₂-NCO, wie beispielsweise -C₆H₃(CH₃)NCO, -C₆H₄-NCO, C₇-C₁₅-Alkylaryl, insbesondere-C(CH₃)₂-C₆H₄-C(CH₃)₂-NCO, meta oder para, Methyl-C₅-C₇-Cycloalkyl, unsubstituiert oder substituiert mit Isocyanat oder mit Isocyanato-C₁-C₆-Alkyl, insbesondere mit C(CH₃)₂-NCO,
Isophoryl,
C₃-C₆-Heteroaryl, beispielsweise Imidazolyl.

Bevorzugt handelt es sich bei Carbodiimid (C) um ein polymeres Carbodiimid. Unter polymeren Carbodiimide werden im Rahmen der vorliegenden Erfindung solche Verbindungen verstanden, die im Bereich von 2 bis 50, bevorzugt bis zu 20 -N=C=N-Gruppen pro Mol tragen.

Polymere Carbodiimide sind als solche bekannt und können nach an sich bekannten Methoden hergestellt werden, beispielsweise durch Kondensation bzw. Polykondensation von Diisocyanat in Gegenwart eines Katalysators, beispielsweise Trialkylphosphanoxid, acyclisch oder vorzugsweise cyclisch, auch als Phospholenoxid, Triarylphosphinoxid, Alkalimetallalkanoat, beispielsweise Natriumethanolat, Alkalimetallcarbonat, beispielsweise Natriumcarbonat oder Kaliumcarbonat, oder tertiärem Amin, beispielsweise Triethylamin. Besonders geeignete Katalysatoren sind Phospolanoxide und Phospholenoxide, z.B. 1-Phenyl-2-methylphospholenoxid-2, 1-Phenyl-2-methylphospholenoxid-3, 1-Methylphospholenoxid-2 und 1-Methylphospholenoxid-3. siehe beispielsweise US 2,853,473. Bei der Kondensation bzw. Polykondensation zu polymerem Carbodiimid wird Kohlendioxid abgespalten.

Beispiele für polymere Carbodiimide sind erhältlich durch Kondensation bzw. Polykondensation von mindestens einem aromatischen Diisocyanat, beispielsweise 2,4-Toluylendiisocyanat, 4,4'-Diphenylmethandiisocyanat oder 1,7-Naphthylendiisocyanat oder mindestens einem aliphatischen oder cycloaliphatischen Diisocyanat wie beispielsweise Isophorondiisocyanat, Trimethylendiisocyanat, Tetramethylendiisocyanat, Hexamethylendiisocyanat, Dodecamethylendiisocyanat, Cyclohexan-1,4-diisocyanat, 2,4-Hexahydrotoluylendiisocyanat, 2,6-Hexahydrotoluylendiisocyanat und 4,4'-Dicyclohexylmethandiisocyanat.

Bevorzugte polymere Carbodiimide sind Copolycarbodiimide, erhältlich durch Kondensation bzw. Polykondensation von mindestens einem aromatischen Diisocyanat, beispielsweise 2,4-Toluylendiisocyanat, 4,4'-Diphenylmethandiisocyanat oder 1,7-Naphthylendiisocyanat, mit mindestens einem aliphatischen oder cycloaliphatischen Diisocyanat wie beispielsweise Isophorondiisocyanat, Trimethylendiisocyanat, Tetramethylendiisocyanat, Hexamethylendiisocyanat, Dodecamethylendiisocyanat, Cyclohexan-1,4-diisocyanat, 2,4-Hexahydrotoluylendiisocyanat, 2,6-Hexahydrotoluylendiisocyanat und 4,4'-Dicyclohexylmethandiisocyanat.

Ganz besonders bevorzugt handelt es sich bei Carbodiimid (C) um ein polymeres Carbodiimid, erhältlich durch Polykondensation von m-TMXDI oder p-TMXDI 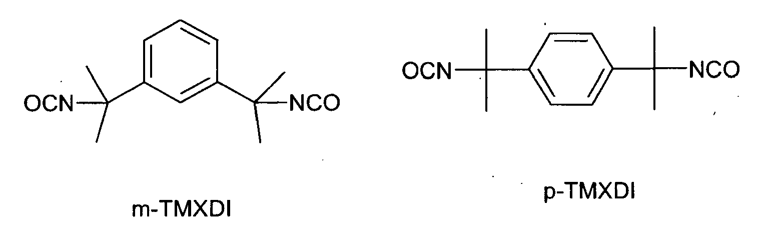 oder Mischungen von m-TMXDI und p-TMXDI mit 2 bis 20, bevorzugt bis 15 und besonders bevorzugt bis 10 -N=C=N-Gruppen pro Mol.

Reaktionspartner von Carbodiimid (C) ist mindestens ein Diol (D), Triol (D) oder Polyol (D).

Beispiele für geeignete Diole (D) sind Ethylenglykol, Diethylenglykol, Triethylenglykol, Tetraethylenglykol, 1,3-Propandiol, 1,4-butandiol, Propylenglykol, Dipropylenglykol, Tripropylenglykol, Tetrapropylenglykol, Butylenglykol, 1,6-Hexandiol, 1,5-Pentandiol, Polyethylengykol mit einem mittleren Molekulargewicht Mₙ im Bereich von 200 bis 5.000 g/mol, Polypropylenglykol mit einem mittleren Molekulargewicht Mₙ im Bereich von 200 bis 5.000 g/mol, Polytetrahydrofuran mit einem Molekulargewicht Mₙ im Bereich von 200 bis 5.000 g/mol, Ethylenoxid-Propylenoxid-Copolymere, insbesondere Blockcopolymere von Ethylenoxid und Propylenoxid.

Beispiele für bevorzugte Diole (D) sind weiterhin aromatische Diole wie beispielsweise Resorcin, Hydrochinon, 4,4'-Diphenyldiol, Hydrochinon-di-(para-hydroxybenzoesäureester), Bisphenol A sowie Alkoxylierungsprodukte, insbesondere Ethoxylierungsprodukte und Propoxylierungsprodukte der vorstehend genannten aromatischen Diole, wie beispielsweise Verbindungen der allgemeinen Formel III 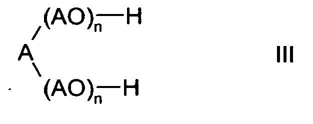 wobei die Variablen wie folgt definiert sind:
- A: ist ein divalenter organischer Rest mit einem bis 40 C-Atomen, bevorzugt 2 bis 30 C-Atomen, vorzugsweise ein organisches Diol, insbesondere ein organischer Rest mit mindestens einem, bevorzugt mindestens zwei Phenylringen, die substi- tuiert sein können, beispielsweise para-O-C₆H₄-O-, para,para'-O-C₆H₄-C₆H₄-O-, para,para'-O-C₆H₄-C(CH₃)₂-C₆H₄-O-,

AO wird gewählt aus C₂-C₄-Alkylenoxid, beispielsweise Butylenoxid, insbesondere Ethylenoxid CH₂CH₂O ("EO") und Propylenoxid CH₂C(CH₃)O ("PO")
- n: verschieden oder vorzugsweise gleich und gewählt aus Zahlen im Bereich von null bis 50, bevorzugt 2 bis 20 und besonders bevorzugt 3 bis 15.

Bevorzugt sind Verbindungen der Formel IV

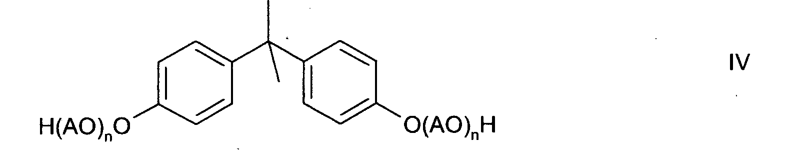

Beispiele für ganz besonders bevorzugte Diole (D) sind

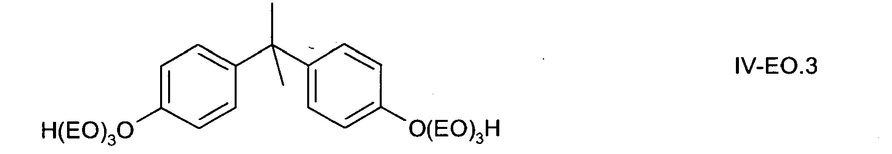

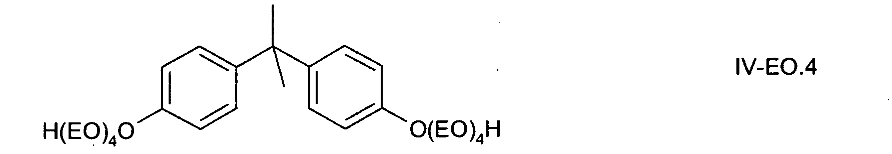

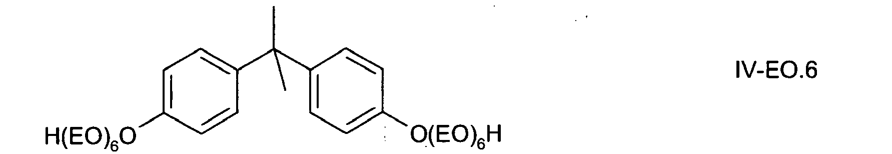

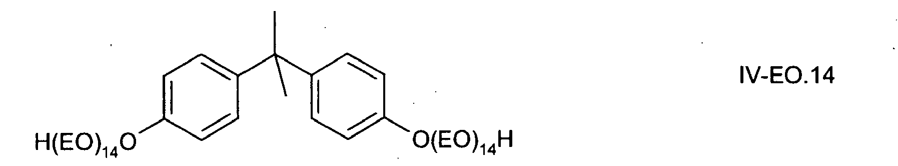

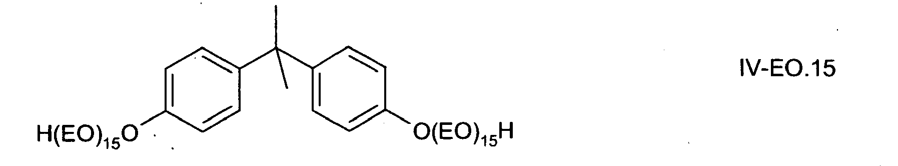

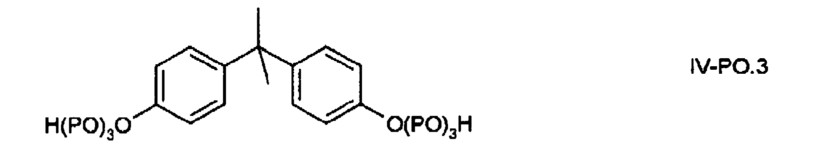

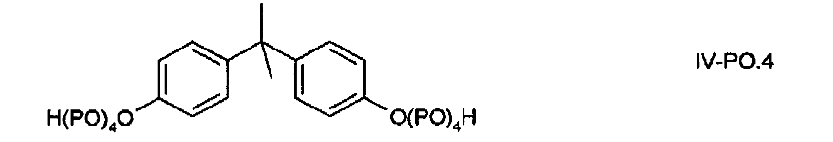

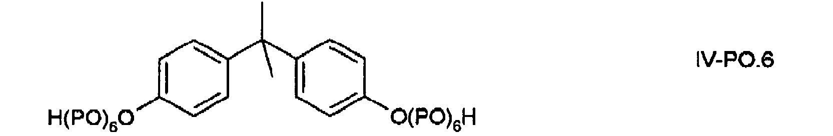

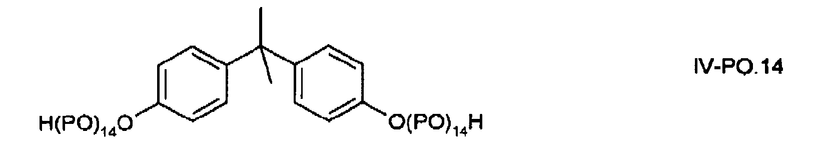

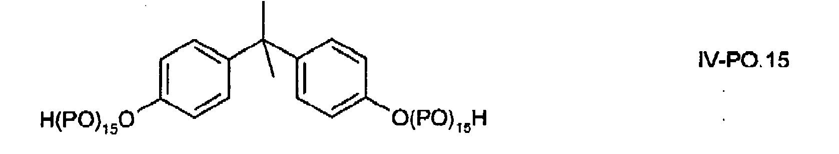

Beispiele für geeignete Triole (D) sind Glycerin, 1,1,1-Trimethylelolethan, 1,1,1-Trimethylolpropan, 1,1,1-Trimethylolbutan, 1,2,4-Butantriol und 1,2,3-Butantriol.

Beispiele für geeignete Polyole (D) sind aliphatische Verbindungen mit 4 oder mehr Hydroxylgruppen pro Molekül, beispielsweise Diglycerin, Sorbitol, Mannitol, Pentaerythrit, dimeres Pentaerythrit, Glucose, Fructose und Mannitol.

Zur Umsetzung von Carbodiimid (C) mit Diol (D), Triol (D) oder Polyol (D) kann man Carbodiimid (C) mit Diol (D), Triol (D) oder Polyol (D) vermischen und vorzugsweise miteinander erwärmen, beispielsweise auf Temperaturen im Bereich von 50 bis 120°C, bevorzugt 60 bis 100°C.

Bevorzugt wählt man für den Fall, dass man Carbodiimid (C) mit Diol (D), Triol (D) oder Polyol (D) umzusetzen wünscht, solche Carbodiimide aus, die mindestens eine, bevorzugt mindestens zwei endständige Gruppen aufweisen, die mit Hydroxylgruppen reagieren können. Beispiele für besonders gut geeignete endständige Gruppen sind Carboxylgruppen und Isocyanatgruppen.

Die Umsetzung von Carbodiimid (C) mit Diol (D), Triol (D) oder Polyol (D) kann man mit oder ohne Katalysator durchführen.

Man kann Umsetzungsprodukt (B) isolieren und aufreinigen. Beispielsweise kann man nicht umgesetztes Diol (D), Triol (D) bzw. Polyol (D) abtrennen. In einer bevorzugten Ausführungsform der vorliegenden Erfindung verzichtet man jedoch auf das Isolieren und Aufreinigen von Umsetzungsprodukt (B) und setzt es gegebenenfalls mit Verunreinigungen ein.

Man kann Carbodiimid (C) und Diol (D) bzw. Triol (D) bzw. Polyol (D) in stöchiometrischen Mengen einsetzen. So ist es beispielsweise möglich, für den Fall, dass Carbodiimid (C) zwei Isocyanatgruppen pro Molekül aufweist, es mit zwei Mol Diol (D) bzw. Triol (D) bzw. Polyol (D) umzusetzen.

In einer anderen Ausführungsform setzt man Carbodiimid (C) und Diol (D) bzw. Triol (D) bzw. Polyol (D) in nicht stöchiometrischem Verhältnis miteinander um und reinigt anschließend auf oder verzichtet auf das Aufreinigen.

Umsetzungsprodukt (B) enthält in der Regel mindestens eine Carbodiimidgruppe pro Molekül.

In einer Ausführungsform der vorliegenden Erfindung enthält zur Durchführung des erfindungsgemäßen Verfahrens eingesetzte wässrige Formulierung mindestens ein Carbodiimid (C). Carbodiimide (C) sind vorstehend beschrieben.

In einer Ausführungsform der vorliegenden Erfindung enthält zur Durchführung des erfindungsgemäßen Verfahrens eingesetzte wässrige Formulierung mindestens ein Diol (D), Triol (D) oder Polyol (D). Diole (D), Triole (D) und Polyole (D) sind vorstehend beschrieben.

In einer Ausführungsform der vorliegenden Erfindung setzt man mindestens ein Umsetzungsprodukt (B) ein, und zwar entweder statt Carbodiimid (C) und statt Diol, Triol oder Polyol (D), oder man setzt Umsetzungsprodukt (B) zusätzlich zu Carbodiimid (C) oder zusätzlich zu Diol, Triol oder Polyol (D) ein, oder man setzt Umsetzungsprodukt (B) zusätzlich zu Carbodiimid (C) und Diol, Triol oder Polyol (D) ein.

In einer Ausführungsform der vorliegenden Erfindung liegen in wässriger Formulierung, die im erfindungsgemäßen Verfahren eingesetzt wird, Carbodiimid (C) und gegebenenfalls Diol (D) bzw. Triol (D) bzw. Polyol (D) nebeneinander vor.

In einer Ausführungsform der vorliegenden Erfindung setzt man mindestens ein Umsetzungsprodukt (B) ein, das durch Umsetzung von mindestens einem Isocyanatgruppen-haltigen Carbodiimid (C) mit Diethylenglykol, Triethylenglykol, Tetraethylenglykol oder Polyethylenglykol erhältlich ist.

In einer Ausführungsform der vorliegenden Erfindung setzt man mindestens ein Umsetzungsprodukt (B) ein, das durch Umsetzung von einem polymeren Carbodiimid, erhältlich durch Polykondensation von m-TMXDI oder p-TMXDI oder Mischungen von m-TMXDI und p-TMXDI mit 2 bis 20, bevorzugt bis 15 und besonders bevorzugt bis 10 -N=C=N-Gruppen pro Mol, mit Polyethylenglykol erhältlich ist.

In einer Ausführungsform der vorliegenden Erfindung enthält wässrige Formulierung weiterhin mindestens ein Pigment (E).

Unter Pigmenten (E) sind im Rahmen der vorliegenden Erfindung praktisch nicht lösliche, dispergierte feinteilige, organische oder anorganische Farbmittel gemäß der Definition in DIN 55944 zu verstehen. Bevorzugt wählt man mindestens organisches Pigment und/oder Metallpigment aus.

Beispielhaft ausgewählte organische Pigmente sind

| | |
|---|---|
| Monoazopigmente: | C.I. Pigment Brown 25; C.I. Pigment Orange 5, 13, 36 und 67; |
| | C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; |
| | C.I. Pigment Yellow 1, 3, 73, 74, 65, 97, 151 und 183; |
| | |
| Disazopigmente: | C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188; |
| Anthanthronpigmente: | C.I. Pigment Red 168 (C.I. Vat Orange 3); |
| | |
| Anthrachinonpigmente: | C.I. Pigment Yellow 147 und 177; C.I. Pigment Violet 31; |
| Anthrapyrimidinpigmente: | C.I. Pigment Yellow 108 (C.I. Vat Yellow 20); |
| Chinacridonpigmente: | C.I. Pigment Red 122, 202 und 206; C.I. Pigment Violet 19; |
| Chinophthalonpigmente: | C.I. Pigment Yellow 138; |
| Dioxazinpigmente: | C.I. Pigment Violet 23 und 37; |
| Flavanthronpigmente: | C.I. Pigment Yellow 24 (C.I. Vat Yellow 1); |
| Indanthronpigmente: | C.I. Pigment Blue 60 (C.I. Vat Blue 4) und 64 (C.I. Vat Blue 6); |
| Isoindolinpigmente: | C.I. Pigment Orange 69; C.I. Pigment Red 260; C.I. Pigment Yellow 139 und 185; |
| Isoindolinonpigmente: | C.I. Pigment Orange 61; C.I. Pigment Red 257 und 260; |
| | C.I. Pigment Yellow 109, 110, 173 und 185; |
| Isoviolanthronpigmente: | C.I. Pigment Violet 31 (C.I. Vat Violet 1); |
| Metallkomplexpigmente: | G.I. Pigment Yellow 117, 150 und 153; C.I. Pigment Green 8; |
| Perinonpigmente: | C.I. Pigment Orange 43 (C.I. Vat Orange 7); |
| | C.I. Pigment Red 194 (C.I. Vat Red 15); |
| Perylenpigmente: | C.I. Pigment Black 31 und 32; C.I. Pigment Red 123, 149, 178, 179 (C.I. Vat Red 23), 190 (G.I. Vat Red 29) und 224; |
| | C.I. Pigment Violet 29; |
| Phthalocyaninpigmente: | C.I. Pigment Blue 15, 15:1, 15:2, 15:3, 15:4, 15:6 und 16; |
| | C.I. Pigment Green 7 und 36; |
| Pyranthronpigmente: | C.I. Pigment Orange 51; C.I. Pigment Red 216 (C.I. Vat Orange 4); |
| Thioindigopigmente: | C.I. Pigment Red 88 und 181 (C.I. Vat Red 1); |
| | C.I. Pigment Violet 38 (C.I. Vat Violet 3); |
| Triarylcarboniumpigmente: | C.I. Pigment Blue 1, 61 und 62; C.I. Pigment Green 1; |
| | C.I. Pigment Red 81, 81:1 und 169; C.I. Pigment Violet 1, 2, 3 und 27; C.I. Pigment Black 1 (Anilinschwarz); |
| | C.I. Pigment Yellow 101 (Aldazingelb); |
| | C.I. Pigment Brown 22. |

Beispiele für besonders bevorzugte Pigmente sind: C.I. Pigment Yellow 138, C.I. Pigment Red 122 und 146, C.I. Pigment Violet 19, C.I. Pigment Blue 15:1, 15:2, 15:3 und 15:4, C.I. Pigment Black 7, C.I. Pigment Orange 5, 38 und 43 und C.I. Pigment Green 7.

Weitere geeignete Pigmente (E) sind metallische Pigmente wie beispielsweise Goldbronze, Silberbronze, Glitter. Weiterhin geeignet sind auch Pigmente (E), die in Abhängigkeit vom Blickwinkel unterschiedliche Farben aufweisen, wie beispielsweise Colour variable Pigments: Paliochrom, Variochrom sowie flüssigkristalline Effektpigmente auf Basis vernetzter oder hochvernetzter cholesterisch flüssigkristalliner Phasen.

Der mittlere Durchmesser von Pigment (E) liegt üblicherweise im Bereich von 20 nm bis 1,5 µm, bevorzugt im Bereich von 300 bis 500 nm.

Für den Fall, dass man Pigment (E) aus der Gruppe der Effektpigmente wählt, ist es bevorzugt, plättchenförmige Effektpigmente zu wählen, beispielsweise mit einem mittleren Durchmesser im Bereich von 100 nm bis 1,5 µm und einer Dicke im Bereich von 20 nm bis 200 nm, wobei er mittlere Durchmesser vorzugsweise mindestens doppelt so groß ist wie Dicke.

Die zur Durchführung des erfindungsgemäßen Verfahrens eingesetzte wässrige Formulierung kann weiterhin einen oder mehrere Wirkstoffe (F) enthalten, zusätzlich oder anstatt Pigment (E). Geeignete Wirkstoffe (F) können beispielsweise gewählt werden aus Flammfestmitteln, Duftstoffen, Insektenvernichtungsmitteln (Insektiziden) und Weichmachern. Als Beispiele für besonders bevorzugte Weichmacher seien Esterverbindungen, gewählt aus den Gruppen der mit Alkanolen vollständig veresterten aliphatischen oder aromatischen Di- oder Polycarbonsäuren und der mindestens einfach mit Alkanol veresterten Phosphorsäure genannt.

In einer Ausführungsform der vorliegenden Erfindung handelt es sich bei Alkanolen um C₄-C₁₈-Alkanole, bevorzugt C₆-C₁₄-Alkanole, verzweigt oder vorzugsweise unverzweigt.

Bevorzugte Beispiele für mit Alkanol vollständig veresterte aromatische Di- oder Polycarbonsäuren sind mit Alkanol vollständig veresterte Phthalsäure, Isophthalsäure und Mellithsäure; beispielhaft seinen genannt: Di-n-octylphthalat, Di-n-nonylphthalat, Di-n-decylphthalat, Di-n-octylisophthalat, Di-n-nonylisophthalat, Di-n-decylisophthalat.

Bevorzugte Beispiele für mit C₄-C₁₈-Alkanol vollständig veresterte aliphatische Di- oder Polycarbonsäuren sind beispielsweise Adipinsäuredi-n-butylester, Adipinsäurediisobutylester, Glutarsäuredi-n-butylester, Glutarsäurediisobutylester, Bernsteinsäuredi-n-butylester, Bernsteinsäurediisobutylester sowie Mischungen der vorstehend genannten Verbindungen.

Bevorzugte Beispiele für mindestens einfach mit Alkanol veresterte Phosphorsäure sind C₄-C₁₈-Alkyl-di-C₆-C₁₄-Aryl-Phosphate wie Isodecyldiphenylphosphat.

Weitere geeignete Beispiele für Weichmacher sind mindestens einfach mit C₁C₁₀-Alkylcarbonsäure veresterte aliphatische oder aromatische Di- oder Polyole.

Bevorzugte Beispiele für mindestens einfach mit C₁-C₁₀-Alkylcarbonsäure veresterte aliphatische oder aromatische Di- oder Polyole ist 2,2,4-Trimethylpentan-1,3-diol-monoisobutyrat.

Weitere geeignete Weichmacher sind Polyester, erhältlich durch Polykondensation von aliphatischer Dicarbonsäure und aliphatischem oder cycloaliphatischem Diol, beispielsweise Adipinsäure oder Bernsteinsäure oder 1,2-Cyclohexandiol oder 1,2- oder 1,4-Cyclohexandimethanol (als Isomerengemisch oder als eines der reinen Isomeren) und 1,2-Propandiol, vorzugsweise mit einem M_{w} von 200 bis 2.000 g/mol, und Polypropylenglykolalkylphenylether, vorzugsweise mit einem M_{w} von 450 bis 5.000 g/mol.

Weitere geeignete Weichmacher sind mit zwei verschiedenen Alkoholen veretherte Polypropylenglykole mit einem Molekulargewicht M_{w} im Bereich von 400 bis 800 g/mol, wobei vorzugsweise einer der Alkohole ein Alkanol, insbesondere ein C₄-C₁₈-Alkanol sein kann und der andere Alkohol vorzugsweise ein aromatischer Alkohol, beispielsweise o-Kresol, m-Kresol, p-Kresol und insbesondere Phenol sein kann.

Wünscht man eine Wasserdichtbeschichtung oder eine sogenannte Black-Out-Beschichtung (Sichtschutz) durchzuführen, so kann man schwarze oder weiße Festteilchen wie beispielsweise Kaolin, Ruß oder Titandioxid als Wirkstoff (F) einsetzen.

In einer Ausführungsform der vorliegenden Erfindung kann erfindungsgemäß eingesetzte wässrige Formulierung einen oder mehrere Hilfsstoffe (G) enthalten. Hilfsstoffe (G) kann man beispielsweise wählen aus Verdickungsmitteln, Lösemitteln, Netzmitteln, Entschäumern, Griffverbesserern, Dispergiermitteln, Wasserrückhaltemitteln, Antiabsetzmitteln und/oder Bioziden. Beispiele für geeignete Hilfsstoffe (G) sind unten genannt.

In einer Ausführungsform der vorliegenden Erfindung enthalten im erfindungsgemäßen Verfahren eingesetzte wässrige Formulierungen gegebenenfalls ein oder mehrere Mikrokapselmaterialien (H), im Rahmen der vorliegenden Erfindung auch als Mikrokapseln oder Mikrokapseln (H) bezeichnet, und zwar zusätzlich zu oder anstatt Pigment (E).

Die erfindungsgemäß enthaltenen Mikrokapseln sind Teilchen mit einem Kapselkern bestehend überwiegend, zu mehr als 95 Gew.-%, aus Latentwärmespeichermaterial und einem Polymer als Kapselwand. Der Kapselkern ist dabei abhängig von der Temperatur fest oder flüssig. Die mittlere Teilchengröße der Kapseln (Z-Mittel mittels Lichtstreuung) beträgt 0,5 bis 100 µm, bevorzugt 1 bis 80 µm insbesondere 1 bis 50 µm. Das Gewichtsverhältnis von Kapselkern zu Kapselwand beträgt im allgemeinen von 50:50 bis 95:5. Bevorzugt wird ein Kern/Wand-Verhältnis von 70:30 bis 93:7.

Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weisen die Latentwärmespeichermaterialien einen fest/flüssig Phasenübergang im Temperaturbereich von 0 bis 70°C insbesondere von 10 bis 50°C und ganz besonders bevorzugt von 18 bis 35°C auf, abhängig von der gewünschten Anwendung. In der Regel handelt es sich bei dem Latentwärmespeichermaterial um eine organische, bevorzugt lipophile Substanz.

Als geeignete Substanzen sind beispielhaft zu nennen:
- aliphatische Kohlenwasserstoffverbindungen wie gesättigte oder ungesättigte C₁₅-C₄₀-Kohlenwasserstoffe, die verzweigt oder bevorzugt linear sind, z.B. n-Pentadecan (Schmelzpunkt bei 10°C), n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan, besonders bevorzugt n-Hexadecan mit einem Schmelzpunkt bei 18°C, n-Octadecan mit einem Schmelzpunkt bei 28°C, n-Eicosan mit einem Schmelzpunkt bei 35°C oder Paraffine mit einem Erweichungspunkt von 66 bis 70°C,
- aromatische Kohlenwasserstoffverbindungen
- gesättigte oder ungesättigte C₆-C₄₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole sowie die sogenannten Oxoalkohole, die man durch Hydroformylierung von α-Olefinen und weiteren Umsetzungen erhält;
- C₆C₄₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe.

Weiterhin sind Mischungen dieser Substanzen geeignet, solange es nicht zu einer Schmelzpunkterniedrigung außerhalb des gewünschten Bereichs kommt oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den Kapselkern-bildenden Substanzen in ihnen lösliche Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120 K höheren Schmelzpunkt als die eigentliche Kemsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Das Latentwärmespeichermaterial wird je nach Temperaturbereich, in dem die Wärmespeicherung gewünscht ist, gewählt.

Als Polymer für die Kapselwand können prinzipiell die für die Mikrokapseln für Durchschreibepapiere bekannten formaldehydfreien Materialien verwendet werden. So ist es beispielsweise möglich, die Latentwärmespeichermaterialien nach den in der GB-A 870476, US 2,800.457, US 3,041,289 beschriebenen Verfahren in Gelatine mit anderen Polymeren zu verkapseln.

Bevorzugte Wandmaterialien, da sehr alterungsstabil, sind duroplastische Polymere. Unter duroplastisch sind dabei Wandmaterialien zu verstehen, die aufgrund des hohen Vernetzungsgrades nicht erweichen, sondern sich bei hohen Temperaturen zersetzen. Geeignete duroplastische Wandmaterialien sind beispielsweise hochvemetzte Polyurethane sowie hochvemetzte Methacrylsäureesterpolymere.

In den von den Durchschreibepapieren her bekannten Verfahren werden die Harze als Prepolymere eingesetzt. Das Prepolymer ist noch in der wässrigen Phase löslich und wandert im Verlauf der Polykondensation an die Grenzfläche und umschließt die Öltröpfchen. Verfahren zu Mikroverkapselung mit Formaldehydharzen sind allgemein bekannt und beispielsweise in der EP-A 0 562 344 und EP-A 0 974 394 beschrieben.

Kapselwände aus Polyurethanen sind ebenfalls von den Durchschreibepapieren her bekannt. Die Kapselwände entstehen durch Umsetzung von NH₂-Gruppen bzw. OH-Gruppen tragenden Reaktanden mit Di- und/oder Polyisocyanaten. Geeignete Isocyanate sind beispielsweise Ethylendiisocyanat, 1,4-Tetramethylendiisocyanat, 1,6-Hexamethylendiisocyanat und 2,4- und 2,6-Toluylendiisocyanat. Ferner seien Polyisocyanate wie Derivate mit Biuretstruktur, Polyuretonimine und Isocyanurate erwähnt. Als Reaktanden kommen in Frage: Hydrazin, Guanidin und dessen Salze, Hydroxylamin, Di- und Polyamine und Aminoalkohole. Solche Grenzflächenpolyadditionsverfahren sind beispielsweise aus der US 4.021,595. EP-A 0 392 876 und EP-A 0 535 384 bekannt.

Bevorzugt werden Mikrokapseln, deren Kapselwand ein hochvemetztes Methacrylsäureesterpolymer ist. Der Vernetzungsgrad wird dabei mit einem Vemetzeranteil größer oder gleich 10 Gew.-% bezogen auf das gesamte Polymer erzielt.

In den bevorzugten Mikrokapseln sind die Wand-bildenden Polymere aus 10 bis 100 Gew.-%, vorzugsweise 30 bis 95 Gew.-% eines oder mehrerer C₁-C₂₄-Alkylester der Acryl- und/oder Methacrylsäure als Monomere I aufgebaut. Außerdem können die Polymere bis zu 80 Gew.-%, vorzugsweise 5 bis 60 Gew.-%, insbesondere 10 bis 50 Gew.-%, eines bi- oder polyfunktionellen Monomers als Monomere II, welches in Wasser nicht löslich oder schwer löslich ist, einpolymerisiert enthalten. Daneben können die Polymere bis zu 90 Gew.-%, vorzugsweise bis zu 50 Gew.-%, insbesondere bis zu 30 Gew.-% sonstige Monomere III einpolymerisiert enthalten.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/I bei 20°C zu verstehen. Unter bi- oder polyfunktionellen Monomeren versteht man Verbindungen, die wenigstens 2 nichtkonjugierte ethylenische Doppelbindungen haben. Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Nach einer weiteren bevorzugten Ausführungsform sind die Wand-bildenden Polymere aus 30 bis 90 Gew.-% Methacrylsäure, 10 bis 70 Gew.-% eines Alkylesters der (Meth)acrylsäure, bevorzugt Methylmethacrylat, tert-Butylmethacrylat, Phenylmethacrylat und Cyclohexylmethacrylat, und 0 bis 40 Gew.-% weitere ethylenisch ungesättigter Monomeren gebildet. Diese weiteren ethylenisch ungesättigten Monomere können die für diese Ausführungsform bisher nicht erwähnten Monomere I, II oder III sein. Da sie in der Regel keinen wesentlichen Einfluss auf die gebildeten Mikrokapseln dieser Ausführungsform haben, ist ihr Anteil bevorzugt < 20 Gew.-% insbesondere <10 Gew.-%. Derartige Mikrokapseln sowie ihre Herstellung werden in der EP-A-1 251 954 beschrieben, auf die ausdrücklich Bezug genommen wird.

Die zur erfindungsgemäßen Verwendung geeigneten Mikrokapseln (H) lassen sich durch eine sogenannte in-situ-Polymerisation herstellen.

Bevorzugte Mikrokapseln (H) sowie ihre Herstellung sind aus EP-A 0 457 154, DE-A 101 39 171, DE-A 102 30 581 und EP-A 1 321 182 bekannt, auf die ausdrücklich verwiesen wird. So stellt man die Mikrokapseln in der Weise her, dass man aus den Monomeren, einem Radikalstarter, mindestens einem Schutzkolloid und der einzukapselnden lipophilen Substanz eine stabile Öl-in-Wasser-Emulsion herstellt, in der sie als disperse Phase vorliegen. Anschließend löst man die Polymerisation der Monomeren durch Erwärmung aus und steuert sie durch weitere Temperaturerhöhung, wobei die entstehenden Polymere die Kapselwand bilden, welche die lipophile Substanz umschließt.

In der Regel führt man die Polymerisation bei 20 bis 100°C, vorzugsweise bei 40 bis 80°C durch. Natürlich sollte die Dispersions- und Polymerisationstemperatur oberhalb der Schmelztemperatur der lipophilen Substanzen liegen.

Nach Erreichen der Endtemperatur setzt man die Polymerisation zweckmäßigerweise noch etwa für eine Zeit von bis zu 2 Stunden fort, um Restmonomergehalte abzusenken. Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen organischen flüchtigen Bestandteilen zu gestalten. Dies kann in an sich bekannter Weise physikalisch durch destillative Entfernung (insbesondere über Wasserdampf-destillation) oder durch Abstreifen mit einem inerten Gas erreicht werden. Ferner kann es chemisch geschehen, wie in der WO 99/24525 beschrieben, vorteilhaft durch redoxinitiierte Polymerisation, wie in der DE-A 44 35 423, DE-A 44 19 518 und DE-A 44 35 422 beschrieben.

Man kann auf diese Weise Mikrokapseln (H) mit einem mittleren Teilchendurchmesser im Bereich von 0,5 bis 100 µm herstellen, wobei die Teilchendurchmesser in an sich bekannter Weise über die Scherkraft, die Rührgeschwindigkeit, das Schutzkolloid und seine Konzentration eingestellt werden kann.

Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen zwischen 1 und 30 µm, vorzugsweise 2 und 10 µm, ausbilden.

In der Regel werden Mikrokapseln(H) in Gegenwart wenigstens eines organischen Schutzkolloids hergestellt, das anionisch oder neutral sein kann. Auch können anionische und nichtionische Schutzkolloide zusammen eingesetzt werden. Bevorzugt verwendet man anorganische Schutzkolloide gegebenenfalls in Mischung mit organischen Schutzkolloiden oder nichtionische Schutzkolloide.

Organische neutrale Schutzkolloide sind Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate sowie Methylhydroxypropylcellulose.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Die anionischen und nichtionischen Schutzkolloide werden in der Regel in Mengen von 0,1 bis 10 Gew.-% eingesetzt, bezogen auf die Wasserphase der Emulsion.

Bevorzugt werden anorganische Schutzkolloide, sogenannte Pickering-Systeme, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Die Wirkweise und ihr Einsatz ist in EP-A 1 029 018 sowie EP-A 1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A-1 029 018, sowie der EP-A-1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Die anorganischen Schutzkolloide werden in der Regel in Mengen von 0,5 bis 15 Gew.%, bezogen auf die Wasserphase, eingesetzt.

Im allgemeinen werden die organischen neutralen Schutzkolloide in Mengen von 0,1 bis 15 Gew.-%, vorzugsweise von 0,5 bis 10 Gew.-% eingesetzt, bezogen auf die Wasserphase.

Vorzugsweise wählt man die Dispergierbedingungen zur Herstellung der stabilen Öl-in-Wasser-Emulsion in an sich bekannter Weise so, dass die Öltröpfchen die Größe der gewünschten Mikrokapseln haben.

Die durch die Polymerisation erhaltenen Mikrokapseldispersionen ergeben bei Sprühtrocknung ein gut rieselfähiges Kapselpulver. Die Sprühtrocknung der Mikrokapseldispersion kann in üblicher Weise erfolgen. Im allgemeinen wird so vorgegangen, dass die Eingangstemperatur des Warmluftstroms im Bereich von 100 bis 200°C, vorzugsweise 120 bis 160°C, und die Ausgangstemperatur des Warmluftstroms im Bereich von 30 bis 90°C, vorzugsweise 60 bis 80°C liegt. Das Versprühen der wässrigen Polymerisatdispersion im Warmluftstrom kann beispielsweise mittels Ein- oder Mehrstoffdüsen oder über eine rotierende Scheibe erfolgen. Die Abscheidung des Polymerisatpulvers erfolgt normalerweise unter Verwendung von Zyklonen oder Filterabscheidern. Die versprühte wässrige Polymerisatdispersion und der Warmluftstrom werden vorzugsweise parallel geführt.

Gegebenenfalls setzt man zur Sprühtrocknung Sprühhilfsmittel zu, um die Sprühtrocknung zu erleichtern, oder bestimmte Pulvereigenschaften einzustellen, z.B. Staubarmut, Rieselfähigkeit oder verbesserte Redispergierbarkeit. Dem Fachmann sind eine Vielzahl von Sprühhilfsmitteln geläufig. Beispiele hierfür finden sich in DE-A 19629525, DE-A 19629526, DE-A 2214410, DE-A 2445813, EP-A 407889 oder EP-A 784449. Vorteilhafte Sprühhilfsmittel sind beispielsweise wasserlösliche Polymere vom Typ Polyvinylalkohol oder teilhydrolysierte Polyvinylacetate, Cellulosederivate wie Hydroxyethylcellulose, Carboxymethylcellulose, Methylcellulose, Methylhydroxyethylcellulose und Methylhydroxypropylcellulose, Polyvinylpyrrolidon, Copolymere des Vinylpyrrolidons, Gelatine, bevorzugt Polyvinylalkohol und partiell hydrolysierte Polyvinylacetate sowie Methylhydroxypropylcellulose.

Das erfindungsgemäße Verfahren kann in gängigen Apparaturen oder Maschinen durchgeführt werden. So kann man beispielsweise Substrat mit wässriger Formulierung tränken. Weiterhin ist es möglich, wässrige Formulierung aufzusprühen, aufzurakeln oder mit Hilfe einer Luftrakel aufzubringen.

Wünscht man textile Substrate (Textilien) zu behandeln, so sind Foulards bevorzugt. Geeignete Foulards enthalten als wesentliches Element zwei aufeinandergepresste Rollen, durch die das Textil geführt wird. Oberhalb der Rollen ist die wässrige Formulierung eingefüllt und benetzt das Textil. Durch den Druck wird das Textil abgequetscht und ein konstanter Auftrag gewährleistet.

In einer weiteren Ausführungsform wird das Textil über eine Umlenkrolle durch einen Trog mit der wässrigen Formulierung geführt. Anschließend wird über ein Walzenpaar, welches oberhalb der wässrigen Formulierung angebracht ist, überschüssige wässrige Formulierung abgepresst und so ein konstanter Auftrag gewährleistet.

In einer Ausführungsform der vorliegenden Erfindung kann man nach dem Behandeln von Substrat mit wässriger Formulierung thermisch behandeln, und zwar in einem oder mehreren Behandlungsschritten. Beispielsweise kann man thermisch trocknen und/oder thermisch fixieren, bevorzugt trocknet man bei Temperaturen von 70 bis 120°C über einen Zeitraum von 30 Sekunden bis 30 Minuten und/oder fixiert, gegebenenfalls anschließend an das Trocknen, bei Temperaturen von 140°C bis 200°C über einen Zeitraum von 30 Sekunden bis 15 Minuten.

Nach Durchführung des erfindungsgemäßen Verfahrens erhält man beschichtete, bevorzugt bedruckte Substrate, bevorzugt flexible Substrate und besonders bevorzugt textile Substrate mit insgesamt vorteilhaften Eigenschaften, insbesondere geringer Vergrauungstendenz, und die keinen Formaldehyd abspalten. Nach dem erfindungsgemäßen Verfahren erhältliche Substrate sind ebenfalls Gegenstand der vorliegenden Erfindung und werden auch als erfindungsgemäße Substrate bezeichnet. Erfindungsgemäße Substrate enthalten Reaktionsprodukte von Carbodiimid (C) mit eingesetztem Diol (D), Triol (D) bzw. Polyol (D).

Ein weiterer Gegenstand der vorliegenden Erfindung sind wässrige Formulierungen, enthaltend
(A) mindestens ein Bindemittel auf Acrylatbasis, das keine Comonomere einpolymerisiert enthält, die bei Einwirkung von Temperaturen im Bereich von 100 bis 250°C pro Mol ein Äquivalent Formaldehyd abspalten können,
(B) mindestens ein Umsetzungsprodukt von mindestens einem Carbodiimid (C), das mindestens eine endständige Gruppe aufweist, gewählt aus Carbonsäuregruppen und Isocyanatgruppen, mit mindestens einem Diol, Triol oder Polyol (D), oder
(C) mindestens ein Carbodiimid, das mindestens eine endständige Gruppe aufweist, gewählt aus Carbonsäuregruppen und Isocyanatgruppen,
(D) mindestens ein Diol, Triol oder Polyol oder
(E) gegebenenfalls mindestens ein Pigment,
(F) gegebenenfalls mindestens einen Wirkstoff,
(G) gegebenenfalls mindestens einen Hilfsstoff,
(H) gegebenenfalls mindestens ein Mikrokapselmaterial.

Bei erfindungsgemäßen wässrigen Formulierungen kann es sich beispielsweise um Färbeflotten, Beschichtungsflotten oder Ausrüstungsflotten und bevorzugt um Druckpasten handeln.

Bindemittel (A), Umsetzungsprodukte (B), Carbodiimide (C), die mindestens eine endständige Gruppe aufweisen, gewählt aus Carbonsäuregruppen und Isocyanatgruppen, Diole (D), Triole (D) bzw. Polyole (D), Wirkstoffe (F), Mikrokapselmaterialien (H) und Pigmente (E) sind vorstehend beschrieben.

Wünscht man solche erfindungsgemäßen wässrigen Formulierungen einzusetzen, die ein oder mehrere Pigmente (E) enthalten, so ist es bevorzugt, dass Pigment (E) in Form einer sogenannten Pigmentzubereitung eingesetzt wird. Pigmentzubereitungen im Sinne der vorliegenden Erfindung kann man herstellten, indem man ein oder mehrere Pigmente (E) mit einem oder mehreren Dispergierhilfsmittel intensiv vermischt. Als Dispergierhilfsmittel sind beispielsweise Tenside, insbesondere nichtionische Tenside wie beispielsweise mehrfach ethoxylierte C₁₀-C₃₀-Fettalkohole oder mehrfach ethoxylierte C₁₁-C₃₁-Oxoalkohole geeignet.

Unter Hilfsstoffen (G) sind beispielsweise Verdickungsmittel (Verdicker), Lösemittel, Entschäumer, Netzmittel, Griffverbesserer, Dispergiermittel, Emulgatoren, Wasserrückhaltemittel, Antiabsetzmittel und/oder Biozide zu verstehen. Bevorzugte Hilfsstoffe sind Verdicker und Entschäumer.

Erfindungsgemäße wässrige Formulierungen können beispielsweise einen oder mehrere natürliche Verdicker oder vorzugsweise einen oder mehrere synthetische Verdicker enthalten. Natürliche Verdicker sind solche Verdicker, die Naturprodukte sind oder durch Aufarbeitung wie beispielsweise Reinigungsoperationen, insbesondere Extraktion von Naturprodukten erhalten werden können. Beispiele für anorganische natürliche Verdicker sind Schichtsilikate wie beispielsweise Bentonit. Beispiele für organische natürliche Verdicker sind vorzugsweise Proteine wie beispielsweise Casein oder bevorzugt Polysaccharide. Besonders bevorzugte natürliche Verdicker sind gewählt aus Agar-Agar, Carrageen, Gummi arabicum, Alginaten wie beispielsweise Natriumalginat, Kaliumalginat, Ammoniumalginat, Calciumalginat und Propylengycolalginat, Pektinen, Polyosen, Johannisbrotbaum-Kernmehl (Carubin) und Dextrinen.

Bevorzugt ist der Einsatz von synthetischen Verdickern, die gewählt sind aus von im Allgemeinen flüssigen Lösungen von synthetischen Polymeren, insbesondere Acrylaten, in beispielsweise Weißöl oder als wässrige Lösungen. Als Verdicker eingesetzte synthetische Polymere enthalten Säuregruppen, die vollständig oder zu einem gewissen Prozentsatz mit Ammoniak neutralisiert werden. Beim Fixierprozess wird Ammoniak freigesetzt, wodurch der pH-Wert gesenkt wird und die eigentliche Fixierung beginnt. Das für die Fixierung notwendige Absenken des pH-Wertes kann alternativ durch Zusatz von nichtflüchtigen Säuren wie z.B. Zitronensäure, Bernsteinsäure, Glutarsäure oder Äpfelsäure erfolgen. Ebenso sind Di-Ammoniumphosphat und Natrium-di-Ammoniumphosphat zum Absenken des pH-Werts geeignet.

Ganz besonders bevorzugte synthetische Verdicker sind gewählt aus Copolymeren von 85 bis 95 Gew.-% Acrylsäure, 4 bis 14 Gew.-% Acrylamid und 0,01 bis maximal 1 Gew.-% des (Meth)acrylamidderivats der Formel V 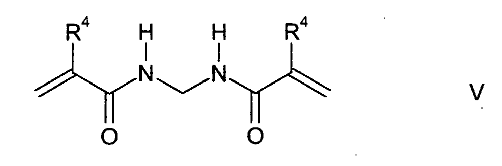 oder 0,01 bis maximal 1 Gew.-% bis-(Meth)acrylat von Ethylenglykol bzw. Propylenglykol
mit Molekulargewichten M_{w} im Bereich von 100.000 bis 2.000.000 g/mol, in denen die Reste R⁴ verschieden oder gleich sein und Methyl oder Wasserstoff bedeuten können.

Erfindungsgemäße wässrige Formulierungen können ein oder mehrere Lösungsmittel enthalten, darunter sind im Rahmen der vorliegenden Erfindung organische Lösungsmittel wie beispielsweise Methanol, Ethanol oder Isopropanol zu verstehen.

Erfindungsgemäße wässrige Formulierungen können einen oder mehrere Entschäumer enthalten. Geeignete Entschäumer sind beispielsweise silikonhaltige Entschäumer wie beispielsweise solche der Formel HO-(CH₂)₃-Si(CH₃)[OSi(CH₃)₃]₂ und HO-(CH₂)₃-Si(CH₃)[OSi(CH₃)₃][OSi(CH₃)₂OSi(CH₃)₃], nicht alkoxyliert oder mit bis zu 20 Äquivalenten Alkylenoxid und insbesondere Ethylenoxid alkoxyliert. Auch Silikonfreie Entschäumer sind geeignet wie beispielsweise mehrfach alkoxylierte Alkohole, z.B. Fettalkoholalkoxylate, bevorzugt 2 bis 50-fach ethoxylierte vorzugsweise unverzweigte C₁₀-C₂₀-Alkanole, unverzweigte C₁₀-C₂₀-Alkanole und 2-Ethylhexan-1-ol. Weitere geeignete Entschäumer sind Fettsäure-C₈-C₂₀-alkylester, bevorzugt Stearinsäure-C₁₀-C₂₀-alkylester, bei denen C₈-C₂₀-Alkyl, bevorzugt C₁₀-C₂₀-Alkyl unverzweigt oder verzweigt sein kann. Weitere geeignete Entschäumer sind Phosphorsäuretrialkylester wie beispielsweise Triisobutylphosphat.

Erfindungsgemäße wässrige Formulierungen können beispielsweise ein oder mehrere Netzmittel enthalten, bevorzugt schaumarme Netzmittel, da Schaumbildung die Qualität der Behandlung durch Bildung von Unegalitäten beeinträchtigen kann. Als Netzmittel werden beispielsweise eingesetzt: Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.
Erfindungsgemäße wässrige Formulierungen können weiterhin einen oder mehrere Griffverbesserer enthalten, die üblicherweise aus Silikonen, insbesondere Polydimethylsiloxanen, und Fettsäureestern ausgewählt werden.

Erfindungsgemäße wässrige Formulierungen können ein oder mehrere Dispergiermittel enthalten. Beispiele für geeignete Dispergiermittel sind aryl- oder alkylsubstituierte Polyglykolether, weiterhin Substanzen, die in US 4,218,218 beschrieben sind, und Homologe mit y (aus den Formeln aus US 4,218,218) im Bereich von 10 bis 37.

Erfindungsgemäße wässrige Formulierungen können einen oder mehrere Emulgatoren enthalten. Geeignete Emulgatoren können kationisch, anionisch oder bevorzugt nichtionisch sein. Beispiele für nicht-ionische Emulgatoren sind beispielsweise ein- oder mehrfach alkoxylierte, bevorzugt propoxylierte und insbesondere mehrfach, z. B. 3 bis 100-fach ethoxylierte Fettalkohole, Oxoalkohole und insbesondere Arylpolyglykolether, beispielsweise der Formel VI a bis VI c:

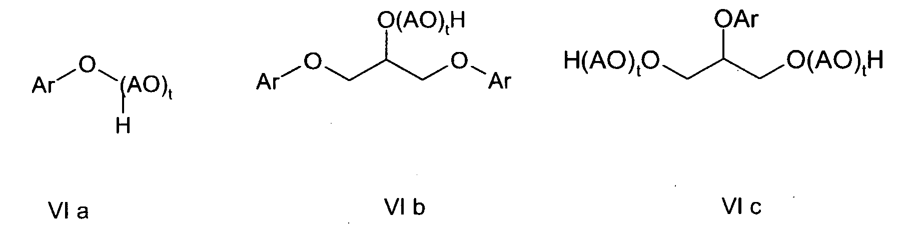

Dabei sind die Variablen wie folgt definiert:
- Ar:: verschieden oder gegebenenfalls gleich, C₆-C₁₄-Aryl, beispielsweise Phenyl, Naphthyl oder Phenanthryl, unsubstituiert oder ein oder mehrfach substituiert, insbesondere mit C₁-C₄-Alkyl, verzweigt oder unverzweigt, beispielsweise Methyl, Ethyl, n-Propyl, Iso-Propyl, n-Butyl, Iso-Butyl, oder mit Alkylaryl, beispielsweise Styryl; bevorzugte substituierte Phenylreste sind jeweils in 2,6-Position oder in 2,4,6-Position mit C₁-C₄-Alkyl substituiert.
- t: verschieden oder vorzugsweise gleich und gewählt aus Zahlen im Bereich von 1 bis 100, bevorzugt 2 bis 50 und besonders bevorzugt 3 bis 20.

Erfindungsgemäße wässrige Formulierungen können ein oder mehrere Wasserrückhaltemittel enthalten. Beispiel für ein geeignetes Wasserrückhaltemittel ist Harnstoff.

Erfindungsgemäße wässrige Formulierungen können ein oder mehrere Biozide enthalten. Geeignete Biozide sind beispielsweise als Proxel-Marken im Handel befindlich. Beispielhaft seien genannt: 1,2-Benzisothiazolin-3-on ("BIT") (kommerziell erhältlich als Proxel®-Marken der Fa. Avecia Lim.) und dessen Alkalimetallsalze; andere geeignete Biozide sind 2-Methyl-2H-isothiazol-3-on ("MIT") und 5-Chlor-2-methyl-2H-isothiazol-3-on ("CIT").

Beispiele für geeignete Antiabsetzmittel sind Silikate und Kieselgele, beispielsweise mit einem mittleren Partikeldurchmesser (insbesondere Sekundärpartikeldurchmesser) im Bereich von 10 bis 500 nm, insbesondere pyrogene Kieselgele. Geeignete pyrogene Kieselgele sind beispielsweise als Aerosil®-Marken im Handel.

Erfindungsgemäße wässrige Formulierungen können als Hilfsstoff (G) insbesondere dann, wenn man sie zum Beschichten verwenden möchte, ein oder mehrere Aufschäummittel enthalten, beispielsweise Ammoniumsalze von Fettsäuren, bevorzugt Ammoniumstearat.

Dabei ist es möglich, dass ein Hilfsstoff (G) mehrere Funktionen übernimmt. Beispielsweise können mehrfach ethoxylierte Fettalkohole wie beispielsweise n-C₁₈H₃₇O(CH₂CH₂O)₁₅H gleichzeitig als Netzmittel, Emulgator und schaumarmes Dispergiermittel wirken.

In einer Ausführungsform der vorliegenden Erfindung enthalten erfindungsgemäße wässrige Formulierungen 1 bis 15 Gew.-% Gew.-%, bevorzugt 1,5 bis 10 Gew.-%, besonders bevorzugt 2 bis 5 Gew.-% Bindemittel (A). Diese Ausführungsform ist bevorzugt, wenn man erfindungsgemäße wässrige Formulierung als Druckpaste für ein Verfahren zum Bedrucken von Substraten ausüben möchte.
In einer Ausführungsform der vorliegenden Erfindung enthalten erfindungsgemäße wässrige Formulierungen 10 bis 25 Gew.-%, bevorzugt 12 bis 20 Gew.-% Bindemittel (A). Diese Ausführungsform ist bevorzugt, wenn man erfindungsgemäße wässrige Formulierung für ein Verfahren zum Beschichten von Substraten ausüben möchte.

In einer anderen Ausführungsform der vorliegenden Erfindung enthalten erfindungsgemäße wässrige Formulierungen 0,5 bis 15 Gew.-%, bevorzugt bis 5 Gew.-% Bindemittel (A). Diese Ausführungsform ist bevorzugt, wenn man erfindungsgemäße wässrige Formulierung als Flotte für ein Verfahren zum Färben von Substraten ausüben möchte.

In einer Ausführungsform der vorliegenden Erfindung enthalten erfindungsgemäße wässrige Formulierungen weiterhin
0,1 bis 15 Gew.%, bevorzugt 0,9 bis 6 Gew.-% Umsetzungsprodukte (B) oder
0,1 bis 15 Gew.-%, bevorzugt 0,2 bis 6 Gew.-% Carbodiimid (C), das mindestens eine endständige Gruppe aufweist, gewählt aus Carbonsäuregruppen und Isocyanatgruppen,
null bis 3 Gew.-%, bevorzugt 0,1 bis 2,5 Gew.-% Diol (D), Triol (D) bzw. Polyol (D),
null bis 10 Gew.-%, bevorzugt 0,05 bis 3 Gew.-% Pigment (E),
null bis insgesamt bis zu 10 Gew.-%, bevorzugt bis zu 6 Gew.-% Hilfsstoff(e) (G),
null bis 60 Gew.-%, bevorzugt mindestens 2 Gew.-% und besonders bevorzugt 10 bis 60 Gew.-% Mikrokapselmaterial (H).
Dabei sind Angaben in Gew.-% jeweils auf gesamte erfindungsgemäße wässrige Formulierung bezogen. Mengenangaben für Bindemittel (A) oder andere Bestandteile von erfindungsgemäßer wässriger Formulierung beziehen sich jeweils auf den Feststoffgehalt des Bindemittels (A) etc.

Erfindungsgemäße wässrige Formulierungen enthalten weiterhin Wasser.

In einer Ausführungsform der vorliegenden Erfindung haben erfindungsgemäße wässrige Formulierungen einen Wassergehalt im Bereich von 60 bis 95 Gew.-%, bevorzugt 80 bis 95 Gew.%. Diese Ausführungsform ist bevorzugt, wenn man erfindungsgemäße wässrige Formulierung als Druckpaste für ein Verfahren zum Färben von Substraten ausüben möchte.

In einer Ausführungsform der vorliegenden Erfindung haben erfindungsgemäße wässrige Formulierungen einen Wassergehalt im Bereich von 20 bis 80 Gew.-%, bevorzugt 30 bis 70 Gew.-%. Diese Ausführungsform ist bevorzugt, wenn man erfindungsgemäße wässrige Formulierung für ein Verfahren zum Beschichten von Substraten ausüben möchte.

In einer Ausführungsform der vorliegenden Erfindung haben erfindungsgemäße wässrige Formulierungen einen Wassergehalt im Bereich von 90 bis 98 Gew.-%. Diese Ausführungsform ist bevorzugt, wenn man erfindungsgemäße wässrige Formulierung als Flotte für ein Verfahren zum Färben von Substraten ausüben möchte.

In einer Ausführungsform der vorliegenden Erfindung hat erfindungsgemäße wässrige Formulierung bei 23°C eine dynamische Viskosität im Bereich von 10 bis 100 dPa·s, bevorzugt 20 bis 30 dPa·s, bestimmt beispielsweise durch Rotationsviskosimetrie; beispielsweise mit einem Haake-Viskosimeter. Der vorstehend genannte Viskositätsbereich gilt insbesondere dann, wenn es sich bei erfindungsgemäßer wässriger Formulierung um eine Druckpaste handelt.

In einer anderen Ausführungsform der vorliegenden Erfindung handelt es sich bei erfindungsgemäßer wässriger Formulierung um eine Färbeflotte.

Erfindungsgemäße Färbeflotten enthalten mindestens ein Bindemittel (A), mindestens ein Carbodiimid (C), mindestens ein Diol (D), Triol (D) oder Polyol (D), vorzugsweise mindestens ein Pigment (E) und/oder mindestens einen Wirkstoff (F) und gegebenenfalls einen oder mehrere Hilfsstoffe (G) und/oder gegebenenfalls mindestens ein Mikrokapselmaterial (H). Dabei kann man Hilfsstoff(e) (G) unter den vorstehend genannten Hilfsstoffen (G) wählen. Vorzugsweise enthält erfindungsgemäße Färbeflotte jedoch keine Verdickungsmittel.

Trockene textile Gewebe, Garne, Filamente, Gewirke oder Vliese, wie sie in der kontinuierlichen Pigmentfärbung eingesetzt werden, enthalten eine große Menge von Luft. Zur Durchführung des erfindungsgemäßen Pigmentfärbeverfahrens ist daher der Einsatz von Entlüftern vorteilhaft. Diese basieren beispielsweise auf Polyethersiloxan-Copolymeren. Sie können in Mengen von 0,01 bis 2 g/l in erfindungsgemäßer Färbeflotte enthalten sein.

Weiterhin können erfindungsgemäße Färbeflotten Antimigrationsmittel enthalten. Geeignete Antimigrationsmittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol

Weiterhin kann man den erfindungsgemäßen Färbeflotten als Zusatz einen oder mehrere Griffverbesserer zusetzen. Hierbei handelt es sich vorzugsweise um Polysiloxane oder um Wachse. Polysiloxane haben hierbei den Vorteil der Permanenz, während die Wachse langsam während des Gebrauchs ausgewaschen werden.

Erfindungsgemäße Färbeflotten weisen üblicherweise einen schwach sauren pH-Wert auf, vorzugsweise im Bereich von 4 bis 6.5. oder einen schwach alkalischen pH-Wert, beispielsweise im Bereich von 7,1 bis 9,5, eingestellt beispielsweise mit Ammoniak. Die Oberflächenspannungen von erfindungsgemäßen Färbeflotten sind so einzustellen, dass ein Benetzen der Ware möglich ist. Geeignet sind beispielsweise Oberflächenspannungen von kleiner 50 mN/m bei 23°C.

In einer Ausführungsform der vorliegenden Erfindung enthält eine erfindungsgemäße Färbeflotte pro Liter neben Bindemittel (A), Umsetzungsprodukt (B) oder Carbodiimid (C) und Diol (D), Triol (D) bzw. Polyol (D)
0 bis 100 g, bevorzugt 0,1 bis 10 g Netzmittel,
0 bis 100 g, bevorzugt 0,1 bis 10 g Entschäumer,
0 bis 100 g, bevorzugt 1 bis 50 g Antimigrationsmittel,
0,5 bis 25 g, bevorzugt 1 bis 12 g Pigment (E).

In einer Ausführungsform der vorliegenden Erfindung hat erfindungsgemäße wässrige Formulierung bei 23°C eine dynamische Viskosität im Bereich von unter 100 mPa·s, gemessen bei 20°C. Der vorstehend genannte Vlskositätsgrenzwert gilt Insbesondere dann, wenn es sich bei erfindungsgemäßer wässriger Formulierung um eine Färbeflotte handelt.

Erfindungsgemäße wässrige Formulierungen sind zur Durchführung des erfindungsgemäßen Verfahrens besonders geeignet. Außerdem zeigen sie eine besonders gute Lagerstabilität und Scherstabilität.

Ein weiterer Gegenstand der vorliegenden Erfindung ist ein Verfahren zur Herstellung von erfindungsgemäßen wässrigen Formulierungen. Das erfindungsgemäße Verfahren zur Herstellung von erfindungsgemäßen Formulierungen gelingt durch Vermischen, insbesondere Verrühren von
(A) mindestens einem Bindemittel auf Acrylatbasis, das keine Comonomere einpolymerisiert enthält, die bei Einwirkung von Temperaturen im Bereich von 100 bis 250°C pro Mol ein Äquivalent Formaldehyd abspalten können,
(B) mindestens ein Umsetzungsprodukt von mindestens einem Carbodiimid (C), das mindestens eine endständige Gruppe aufweist, gewählt aus Carbonsäuregruppen und Isocyanatgruppen, mit mindestens einem Diol, Triol oder Polyol (D) oder
(C) mindestens einem Carbodiimide, das mindestens eine endständige Gruppe aufweist, gewählt aus Carbonsäuregruppen und Isocyanatgruppen, und
(D) mindestens einem Diol, Triol oder Polyol,
(E) gegebenenfalls mindestens einem Pigment,
(F) gegebenenfalls mindestens einen Wirkstoff,
(G) gegebenenfalls mindestens einem Hilfsstoff,
(H) gegebenenfalls mindestens ein Mikrokapselmaterial
und gegebenenfalls Auffüllen mit Wasser.

Die Reihenfolge der Zugabe der Bestandteile (A) bis (G) kann man frei wählen. Wünscht man als Hilfsstoff (G) einen oder mehrere Verdickungsmittel einzusetzen, so ist es bevorzugt, den oder die Verdickungsmittel als letztes oder unmittelbar vor dem Auffüllen mit Wasser zuzugeben.

Das erfindungsgemäße Verfahren zur Herstellung von erfindungsgemäßen Formulierungen kann man in beliebigen Gefäßen durchführen. Wünscht man als Hilfsstoff (G) einen oder mehrere Verdickungsmittel einzusetzen, so ist es bevorzugt, mit Hilfe eines Schnellrührers, beispielsweise eines Ultra-Thurrax, zu vermischen.

Die Erfindung wird durch Arbeitsbeispiele erläutert.

### Vorbemerkung:

Der Gehalt an freiem (abgespaltenem) Formaldehyd wurde jeweils nach Law 112 und nach AATCC 112 Methoden (EN ISO 14 184, Teile 1 und 2), DIN EN ISO 14184-1 und DIN EN ISO 14184-2 bestimmt.

### 1. Herstellung von Bindemitteln (A) und Umsetzungsprodukten (B)

Die Teilchendurchmesserverteilung von dispergierten bzw. emulgierten Copolymerisaten wurde durch Coulter Counter der Fa. Malvern nach ISO 13321 bestimmt. Dynamische Viskositäten wurden stets mit einem Brookfield-Viskosimeter nach DIN 51562-1 bis 4 bestimmt.

### 1.1. Herstellung von Bindemittel (A.1)

Es wurden die folgenden Mischungen bereitet:
Mischung I.1.1:
   277 g vollentsalztes Wasser
   17,9 g 28 Gew.-% wässrige Lösung von n-C₁₂H₂₅(OCH₂CH₂)₃OSO₃Na 244 g n-Butylacrylat, 132 g Styrol, 8 g frisch destillierte Acrylsäure,
   16 g Glycidylmethcrylat.
Mischung 1.1.2: 4,0 g Na₂S₂O₈ in 100 ml vollentsalztem Wasser

In einem 5-I-Kessel mit Rührer, Stickstoff-Anschluss und drei Dosiervorrichtungen wurde eine Suspension vorgelegt, enthaltend 160 ml vollentsalztes Wasser und 9,1 g Polystyrol-Saat (mittlerer Durchmesser 30 nm, 33 Gew.-% Suspension in Wasser) und 0,8 g Natriumpyrophosphat. Durch die Suspension wurde über einen Zeitraum von einer Stunde Stickstoff geleitet. Anschließend wurde die Mischung auf 80°C erwärmt.

Danach wurde simultan mit der Zugabe von Mischung I.1.1 und Mischung I.1.2 begonnen. Mischung I.1.1 wurde innerhalb von 3 Stunden zugegeben, Mischung I.1.2 innerhalb von 3 Stunden 15 Minuten. Während der Zugabe wurde die Temperatur bei 80°C gehalten.

Nach der Beendigung der Zugabe wurde noch 30 Minuten bei 80°C gerührt und anschließend zur Desodorierung simultan eine Lösung von 2 g tert.-Butylhydroperoxid (70 Gew.-% in Wasser) in 23 ml destilliertem Wasser und eine Lösung von 2 g Acetondisulfit in 23,5 ml destilliertem Wasser über einen Zeitraum von 90 Minuten zudosiert. Anschließend kühlte man auf Zimmertemperatur ab, gab eine Mischung von 0,5 g 20 Gew.-% Lösung von 1,2-Benzisothiazolin-3-on in Propylenglykol und 10 ml destilliertem Wasser zu und rührte 10 Minute nach.
Anschließend wurde die so erhältliche Dispersion über ein 125 µm-Netz filtriert. Die Filtrationsdauer betrug 4 Minuten. Dadurch wurden etwa 2 g Koagulat entfernt.

Man erhielt eine wässrige Dispersion von Bindemittel (A.1). Der Feststoffgehalt betrug 39,4 Gew.-%, die dynamische Viskosität betrug 30 mPa·s und der pH-Wert 3,8. Teilchendurchmesserverteilung: Maximum bei 157 nm.

### I.2 Herstellung von Bindemittel (A.2)

Es wurden die folgenden Mischungen bereitet:
Mischung I.2.1:
   203 g vollentsalztes Wasser
   17,9 g 28 Gew.-% wässrige Lösung von n-C₁₂H₂₅(OCH₂CH₂)₃OSO₃Na
   245,2 g n-Butylacrylat, 134,8 g Styrol, 20 g frisch destillierte Acrylsäure.
Mischung I.2.2: 0,8 g Na₂S₂O₈ in 80 ml vollentsalztem Wasser
Mischung I.2.3: 0,4 g HO-CH₂-SO₂Na in 80 ml vollentsalztem Wasser

In einem 5-I-Kessel mit Rührer, Stickstoff-Anschluss und drei Dosiervorrichtungen wurde eine Suspension vorgelegt, enthaltend 160 ml vollentsalztes Wasser und 9,1 g Polystyrol-Saat (mittlerer Durchmesser 30 nm, 33 Gew.-% Suspension in Wasser). Durch die Suspension wurde über einen Zeitraum von einer Stunde Stickstoff geleitet. Anschließend wurde die Mischung auf 75°C erwärmt.

Danach wurde simultan mit der Zugabe von Mischung I.2.1, Mischung 1.2.2 und Mischung 1.2.3 begonnen. Mischung 1.2.1 wurde innerhalb von 3 Stunden zugegeben, Mischung I.2.2 und Mischung I.2.3 innerhalb von 3 Stunden 15 Minuten. Während der Zugabe wurde die Temperatur bei 75°C gehalten.

Nach der Beendigung der Zugabe wurde noch 30 Minuten bei 75°C gerührt und anschließend zur Desodorierung simultan eine Lösung von 2 g tert.-Butylhydroperoxid (70 Gew.-% in Wasser) in 23 ml destilliertem Wasser und eine Lösung von 2 g Acetondisulfit in 23,5 ml destilliertem Wasser über einen Zeitraum von 90 Minuten zudosiert.

Anschließend kühlte man auf Zimmertemperatur ab, gab eine Mischung von 0,5 g 20 Gew.-% Lösung von 1,2-Benzisothiazolin-3-on in Propylenglykol und 10 ml destilliertem Wasser zu und rührte 10 Minute nach.

Danach wurde mit etwa 4 g 25 Gew.-% wässrigem Ammoniak ein pH-Wert von 5 eingestellt.

Anschließend wurde die so erhältliche Dispersion über ein 125 µm-Netz filtriert. Die Filtrationsdauer betrug 4 Minuten. Dadurch wurden etwa 2 g Koagulat entfernt.

Man erhielt eine wässrige Dispersion von Bindemittel (A.2). Der Feststoffgehalt betrug 38,6 Gew.-%, die dynamische Viskosität betrug 45 mPa·s. Teilchendurchmesserverteilung: Maximum bei 156 nm.

### I.3 Herstellung von Bindemittel (A.3)

Es wurden die folgenden Mischungen bereitet:
Mischung I.3.1:
   203 g vollentsalztes Wasser
   17,9 g 28 Gew.-% wässrige Lösung von n-C₁₂H₂₅(OCH₂CH₂)₃OSO₃Na
   245,2 g n-Butylacrylat, 114,8 g Styrol, 20 g frisch destillierte Acrylsäure,
   20 g 2-Hydroxyethylacrylat.
Mischung 1.3.2: 0,8 g Na₂S₂O₈ in 80 ml vollentsalztem Wasser
Mischung 1.3.3: 0,4 g HO-CH₂-SO₂Na in 80 ml völlentsalztem Wasser

In einem 5-I-Kessel mit Rührer, Stickstoff-Anschluss und drei Dosiervorrichtungen wurde eine Suspension vorgelegt, enthaltend 160 ml vollentsalztes Wasser und 9,1 g Polystyrol-Saat (mittlerer Durchmesser 30 nm, 33 Gew.-% Suspension in Wasser). Durch die Suspension wurde über einen Zeitraum von einer Stunde Stickstoff geleitet. Anschließend wurde die Mischung auf 75°C erwärmt.

Danach wurde simultan mit der Zugabe von Mischung I.3.1, Mischung I.3.2 und Mischung I.3.3 begonnen. Mischung I.3.1 wurde innerhalb von 3 Stunden zugegeben, Mischung I.3.2 und Mischung I.3.3 innerhalb von 3 Stunden 15 Minuten. Während der Zugabe wurde die Temperatur bei 75°C gehalten.

Nach der Beendigung der Zugabe wurde noch 30 Minuten bei 75°C gerührt und anschließend zur Desodorierung simultan eine Lösung von 2 g tert.-Butylhydroperoxid (70 Gew.-% in Wasser) in 23 ml destilliertem Wasser und eine Lösung von 2 g Acetondisulfit in 23,5 ml destilliertem Wasser über einen Zeitraum von 90 Minuten zudosiert.

Anschließend kühlte man auf Zimmertemperatur ab, gab eine Mischung von 0,5 g 20 Gew.-% Lösung von 1,2-Benzisothiazolin-3-on in Propylenglykol und 10 ml destilliertem Wasser zu und rührte 10 Minute nach.

Danach wurde mit etwa 4 g 25 Gew.-% wässrigem Ammoniak ein pH-Wert von 4,9 eingestellt.

Anschließend wurde die so erhältliche Dispersion über ein 125 µm-Netz filtriert. Die Filtrationsdauer betrug 4 Minuten. Dadurch wurden etwa 2 g Koagulat entfernt.

Man erhielt eine wässrige Dispersion von Bindemittel.(A.3). Der Feststoffgehalt betrug 40,6 Gew.-%, die dynamische Viskosität betrug 400 mPa·s. Teilchendurchmesserverteilung: Maximum bei 190 nm.

### I.4 Herstellung von Vergleichsbindemittel (V-A.4)

Es wurden die folgenden Mischungen bereitet:
Mischung I.4.1:
   403 g vollentsalztes Wasser
   34,4 g 28 Gew.-% wässrige Lösung von n-C₁₂H₂₅(OCH₂CH₂)₃OSO₃Na
   486 g n-Butylacrylat, 96 g Acrylnitril, 6 g frisch destillierte Acrylsäure,
   12 g N-Methylolmethacrylamid, gelöst in 68 g Wasser.
Mischung I.4.2: 3,0 g Na₂S₂O₈ in 100 ml vollentsalztem Wasser

In einem 5-I-Kessel mit Rührer, Stickstoff-Anschluss und drei Dosiervorrichtungen wurde eine Emulsion vorgelegt, bestehend aus 285 ml vollentsalztem Wasser, 55 g der Mischung I.4.1 und 5 g der Mischung I.4.2. Durch die Emulsion wurde über einen Zeitraum von einer Stunde Stickstoff geleitet. Anschließend wurde die Mischung auf 85°C erwärmt.

Danach wurde simultan mit der Zugabe der Reste von Mischung I.4.1 und Mischung I.4.2 begonnen. Mischung I.4.1 wurde innerhalb von 3 Stunden zugegeben, Mischung

### I.4.2 innerhalb von 3 Stunden 15 Minuten. Während der Zugabe wurde die Temperatur bei 85°C gehalten.

Nach der Beendigung der Zugabe wurde noch 30 Minuten bei 85°C gerührt und anschließend zur Desodorierung simultan eine Lösung von 1,8 g tert.-Butylhydroperoxid (70 Gew.-% in Wasser) in 21 ml destilliertem Wasser und eine Lösung von 2 g HO-CH₂SO₂Na in 25 ml destilliertem Wasser über einen Zeitraum von 90 Minuten zudosiert.

Anschließend kühlte man auf Zimmertemperatur ab, gab eine Mischung von 0,5 g 20 Gew.-% Lösung von 1,2-Benzisothiazolin-3-on in Propylenglykol, 30 g (E.2) (siehe unten) und 40 ml destilliertes Wasser zu und rührte 10 Minute nach.

Anschließend wurde die so erhältliche Dispersion über ein 125 µm-Netz filtriert. Die Filtrationsdauer betrug 4 Minuten. Dadurch wurden etwa 2 g Koagulat entfernt.

Man erhielt eine wässrige Dispersion von Vergleichs-Bindemittel (V-A.4). Der Feststoffgehalt betrug 38,8 Gew.-%, die dynamische Viskosität betrug 30 mPa·s und der pH-Wert 4,3. Teilchendurchmesserverteilung: Maximum bei 281 nm.

### I.5 Herstellung von Umsetzungsprodukten (B.1-1) und (B.1-2)

Die Herstellung von Umsetzungsprodukten (B) erfolgte unter Schutzgasatmosphäre (vorgetrockneter Stickstoff).

Zur Herstellung von Umsetzungsprodukt (B.1-1) ging man wie folgt vor: Man trocknete 500 g Carbodiimid (C.1), einem Carbodiimid auf Basis von meta-TMXDI mit einem titrimetrisch ermittelten NCO-Gehalt von 6,7 Gew.-% (entsprechend etwa 4,2 Carbodümidgruppen/Molekül), 24 Stunden bei 60°C in einem Wärmeschrank. Anschließend legte man das so getrocknete Carbodiimid (C.1) in einem 2-1-Vierhalskolben mit Trockenrohr, Rührer, Thermometer und Gaseinleitungsrohr vor, erwärmte auf 60°C und gab unter Rühren 500 g Polyol (D.8) (Polyethylenglykol mit einem mittleren Molekulargewicht Mₙ von 600 g/mol) zu. Danach wurde auf 90°C erwärmt. Die so erhältliche Reaktionsmischung war zunächst milchig weiß und wurde dann transparent. Man kühlte auf 80°C ab und rührte 90 Minuten bei 80°C. Dann kühlte man ab und erhielt Umsetzungsprodukt (B.1-1), welches bei Zimmertemperatur flüssig war, wasserlöslich war und keine Isocyanatgruppen mehr enthielt.

Zur Herstellung von Umsetzungsprodukt (B.1-2) setzte man 450 g Carbodiimid (C.1) und 550 g Polyol (D.8) analog zur vorstehend beschriebenen Vorgehensweise miteinander um. Man erhielt Umsetzungsprodukt (B.1-2), das ebenfalls bei Zimmertemperatur flüssig war, wasserlöslich war und keine Isocyanatgruppen mehr enthielt.

Zur Herstellung von Umsetzungsprodukt (B.1-3) setzte man 550 g Carbodiimid (C.1) und 450 g Polyol (D.8) analog zur vorstehend beschriebenen Vorgehensweise miteinander um. Man erhielt Umsetzungsprodukt (B.1-3), das ebenfalls bei Zimmertemperatur flüssig war, wasserlöslich war und keine Isocyanatgruppen mehr enthielt.

### II. Herstellung von erfindungsgemäßen wässrigen Formulierungen

### II.1 Herstellung von erfindungsgemäßen Druckpasten

Es wurden die folgenden Ingredienzien eingesetzt:
Carbodiimid (C):
   (C.1): Carbodiimid auf Basis von meta-TMXDI mit einem titrimetrisch ermittelten NCO-Gehalt von 6,7 Gew.-%. Das entspricht etwa 4,2 Carbodiimidgruppen/Molekül.
Diole (D):
   (D.1) Dipropylenglykol 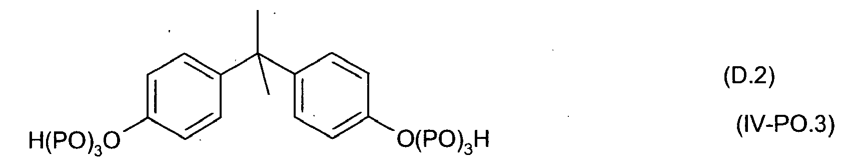 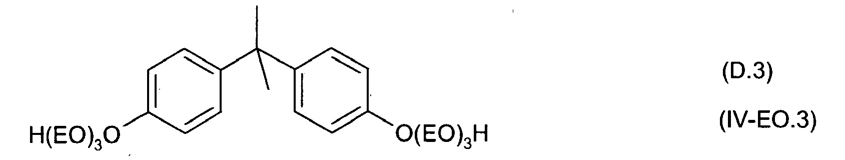 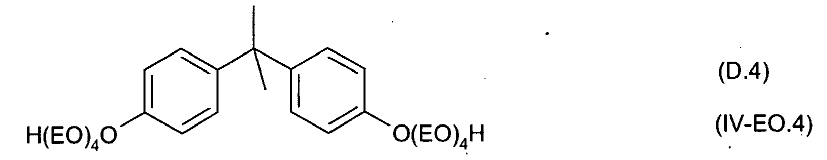 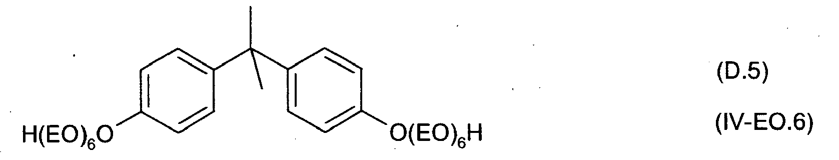 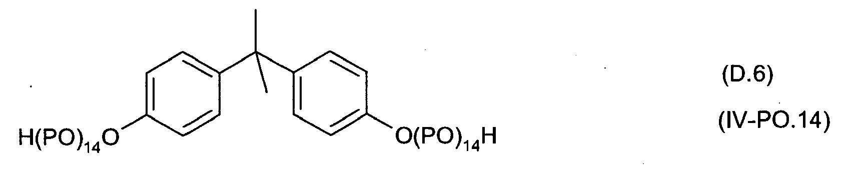
   (D.7): 4,4'-Dihydroxybiphenyl.
   (D.8): Polyethylenglykol mit einem mittleren Molekulargewicht Mₙ von 600 g/mol.
   (D.9): Polyethylenglykol mit einem mittleren Molekulargewicht Mₙ von 200 g/mol.
Pigment (E.1): wurde als Pigmentpräparation eingesetzt

In einer Rührwerkskugelmühle des Typs Drais Superflow DCP SF 12 wurden miteinander vermahlen:

| | |
|---|---|
| 2640 g | Pigment Blau 15:3 (E.1) |
| 460 g | n-C₁₈H₃₇O(CH₂CH₂O)₂₅H |
| 600 g | Glycerin |
| 2300 g | destilliertes Wasser |

Das Vermahlen wurde fortgesetzt, bis die Pigmentpartikel einen mittleren Durchmesser von 100 nm aufwiesen. Man erhielt die Pigmentpräparation P(E.1).

Hilfsstoffe:
(G.1) Copolymer aus Acrylsäure (92 Gew.-%), Acrylamid (7,6 Gew.-%), Methylenbisacrylamid V.1 (0,4 Gew.-%), quantitativ neutralisiert mit Ammoniak (25 Gew.-% in Wasser), Molekulargewicht M_{w} von ca. 150.000g/mol 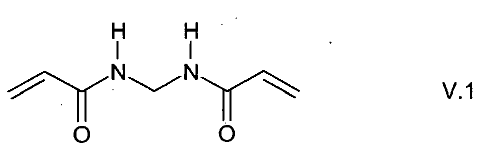 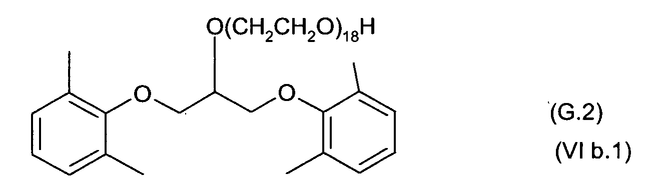
(G.3) C₁₃-Oxoalkohol, gesättigt
(G.4): Polydimethylsiloxan, dynamische Viskosität 5.000 mPa·s, bestimmt bei 23°C.
(G.5): 51 Gew.-% Lösung eines Umsetzungsprodukts von Hexamethyldiisocyanat mit n-C₁₈H₃₇(OCH₂CH₂)₁₅OH in Isopropanol/Wasser (Volumenanteile 2:3)
(G.6) C₁₃/C₁₅-Alkyl-O-(EO)₁₀(PO)₅-CH₃, (EO: CH₂-CH₂-O, PO: CH₂-CH(CH₃)-O)

Man stellte erfindungsgemäße Druckpasten nach der folgenden allgemeinen Vorschrift her:

Man verrührte in einem Rührgefäß die Ingredienzien gemäß Tabelle 1, die man in der folgenden Reihenfolge vermischte:

Man legte 200 ml Wasser und (G.3) vor und gab gegebenenfalls Emulgator (G.2) zu. Wenn der pH-Wert unter 8 lag, stellte man einen pH-Wert von 8,5 durch Zugabe von 25 Gew.-% wässrigen Ammoniak ein. Unter Rühren gab man anschließend (C.1) und Bindemittel (A) gemäß Tabelle zu. Anschließend gab man unter Rühren Diol (D) gemäß Tabelle, (G.1), gegebenenfalls weitere Hilfsstoffe und schließlich P(E.1) zu. Man füllte mit Wasser auf einen Liter auf und verrührte danach 15 Minuten mit einem Schnellrührer des Typs Ultra-Turrax mit etwa 6000 Umdrehungen/min.

Man erhielt erfindungsgemäße Druckpasten gemäß Tabelle 1 bzw. in den Fällen, in denen man ein oder mehrere der vorstehend genannten Ingredienzien wegließ, die entsprechenden Vergleichsdruckpasten.

### II.2 Herstellung von erfindungsgemäßen Färbeflotten, allgemeine Vorschrift Ingredienzien, falls nicht vorstehend charakterisiert:

Man stellte erfindungsgemäße Färbeflotten nach der folgenden allgemeinen Vorschrift her:

Man legte 200 ml Wasser vor und gab (G.2) zu. Unter Rühren gab man anschließend (C.1) und Bindemittel (A.1) bzw. Vergleichsbindemittel (V-A.4) gemäß Tabelle 2 zu. Anschließend gab man unter Rühren Diol (D) gemäß Tabelle 2, weitere Hilfsstoffe und schließlich P(E.1) zu. Man füllte mit Wasser auf einen Liter auf und verrührte danach 15 Minuten mit einem Schnellrührer des Typs Ultra-Turrax mit etwa 6000 Umdrehungen/min.

Man erhielt erfindungsgemäße Färbeflotte FF.2 bzw. in dem Fall, in denen man ein oder mehrere der vorstehend genannten Ingredienzien wegließ, die entsprechende Vergleichsfärbeflotte V-FF.1.

### II.3 Herstellung von Beschichtungsmitteln

Man stellte ein erfindungsgemäßes Beschichtungsmittel her, indem man Ingredienzien gemäß Tabelle 4 wie folgt verrührte:

Man legte 16 ml Wasser vor und gab (G.2) zu. Unter Rühren gab man anschließend (C.1) und Bindemittel (A.1) gemäß Tabelle 4 zu. Anschließend gab man unter Rühren Diol (D) gemäß Tabelle 4 und weitere Hilfsstoffe zu. Man stellte mit 25 Gew.-% wässriger Ammoniaklösung einen pH-Wert von 8 ein und verrührte danach 15 Minuten mit einem Schnellrührer des Typs Ultra-Turrax mit etwa 6000 Umdrehungen/min. Man erhielt ein Beschichtungsmittel mit einer dynamischen Viskosität von 90 dPa·s, bestimmt bei 23°C.

### II.4 Herstellung von Blackout-Beschichtungsmitteln

Man stellte drei erfindungsgemäße Blackout-Beschichtungsmittel her, indem man Ingredienzien gemäß Tabelle 5 vermischte. Dazu legte man 45 ml Wasser vor und gab (G.2) zu. Unter langsamem Rühren gab man anschließend (C.1) und Bindemittel (A.1) gemäß Tabelle 5 zu. Anschließend gab man unter langsamem Rühren Diol (D) gemäß Tabelle 4 und weitere Hilfsstoffe zu. Man stellte mit 25 Gew.-% wässriger Ammoniaklösung einen pH-Wert von 8 ein. Das Rühren erfolgte sehr vorsichtig bis zur zweiten Zugabe von (G.2), um die Bildung von Schaum zu vermeiden. Nach der Zugabe des Ammoniumstearates wurde das Blackout-Beschichtungsmittel durch Einblasen von Luft aufgeschäumt. Man erhielt Blackout-Beschichtungsmittel mit einer dynamischen Viskosität von 17 dPa·s, bestimmt bei 23°C und einem Schaumgewicht vom 250 g/l.

**Tabelle 1: Zusammensetzungen von erfindungsgemäßen Druckpasten DP.2 bis DP.12 und der Vergleichsdruckpaste V-DP.1 und V-DP.7**

| Ingredienz | V-DP.1 | DP.2 | DP.3 | DP.4 | DP.5 | DP.6 | V-DP.7 | DP.8 | DP.9 | DP.10 | DP.11 | DP.12 |
|---|---|---|---|---|---|---|---|---|---|---|---|---|
| (A.1) | 95 | 95 | 95 | 95 | 95 | 95 | 95 | 95 | 95 | 95 | 95 | 95 |
| (C.1) | 2,7 | 2,7 | 2,7 | 2,7 | 2,7 | 2,7 | 7 | 7 | 7 | 7 | 7 | 7 |
| (D.1) | 0 | 1 | 3 | 5 | 7 | 9 | 0 | 4 | 8 | 12 | 16 | 20 |
| P(E.1) | 20 | 20 | 20 | 20 | 20 | 20 | 20 | 20 | 20 | 20 | 20 | 20 |
| (G.1) | 40 | 40 | 40 | 40 | 40 | 40 | 40 | 40 | 40 | 40 | 40 | 40 |
| (G.2) | 5 | 5 | 5 | 5 | 5 | 5 | 5 | 5 | 5 | 5 | 5 | 5 |
| (G.3) | 1 | 1 | 1 | 1 | 1 | 1 | 1 | 1 | 1 | 1 | 1 | 1 |
| NH₃ (25 Gew.-%) | 1 | 1 | 1 | 1 | 1 | 1 | 1 | 1 | 1 | 1 | 1 | 1 |

| | | | | | | | | | | | | |
|---|---|---|---|---|---|---|---|---|---|---|---|---|
| Alle Mengenangaben der Ingredienzien sind in g und beziehen sich auf den jeweiligen Feststoff, lediglich die Angaben für Pigmentpräparation P(E.1) und die wässrige Ammoniaklösung sind tel quelle. | | | | | | | | | | | | |

**Tabelle 1 (Fortsetzung) Zusammensetzungen von erfindungsgemäßen Druckpasten DP.13 bis DP.24**

| Ingredienz | DP.13 | DP.14 | DP.15 | DP.16 | DP.17 | DP.18 | DP.19 | DP.20 | DP.21 | DP.22 | DP.23 | DP.24 |
|---|---|---|---|---|---|---|---|---|---|---|---|---|
| (A.1) | 95 | 95 | 95 | 95 | 95 | 95 | 95 | 95 | 95 | 95 | 95 | 95 |
| (C.1) | 2,7 | 2,7 | 2,7 | 2,7 | 2,7 | 2,7 | 2,7 | 2,7 | 2,7 | 2,7 | 2,7 | 2,7 |
| (D.2) | 5 | 10 | | | | | | | | | | |
| (D.3) | | | 5 | 10 | | | | | | | | |
| (D.4) | | | | | 5 | 10 | | | | | | |
| (D.5) | | | | | | | 5 | 10 | | | | |
| (D.6) | | | | | | | | | 5 | 10 | | |
| (D.7) | | | | | | | | | | | 5 | 10 |
| P(E.1) | 20 | 20 | 20 | 20 | 20 | 20 | 20 | 20 | 20 | 20 | 20 | 20 |
| (G.1) | 40 | 40 | 40 | 40 | 40 | 40 | 40 | 40 | 40 | 40 | 40 | 40 |
| (G.2) | 5 | 5 | 5 | 5 | 5 | 5 | 5 | 5 | 5 | 5 | 5 | 5 |
| (G.3) | 1 | 1 | 1 | 1 | 1 | 1 | 1 | 1 | 1 | 1 | 1 | 1 |

**Tabelle 2: Erfindungsgemäße Färbeflotte FF.2 und Vergleichsfärbeflotte V-FF.1**

| | V-FF.1 | FF.2 |
|---|---|---|
| (A.1) | - | 16 |
| (V-A.4) | 16 | - |
| (C.1) | - | 3,9 |
| (D.1) | - | 4 |
| P(E.1) | 5 | 5 |
| (G.2) | 3 aus (V-A.4) | 3 |
| Na₂SO₄·12 H₂O | 10 | 10 |
| (G.4) | 10 | 10 |

### II.5 Herstellung von Druckpasten, enthaltend Umsetzungsprodukt (B.1-1) oder (B.1-2)

Man ging im Wesentlichen gemäß der allgemeinen Vorschrift aus II.1 vor. Statt (C.1) gab man das jeweilige Umsetzungsprodukt (B.1-1) oder (B.1-2) und gegebenenfalls noch ein oder mehrere Diole (D.1) bis (D.8) zu.

**Tabelle 3: Erfindungsgemäße Druckpasten, die Umsetzungsprodukt (B.1-1) oder (B.1-2) enthalten, und Vergleichsdruckpasten**

| Ingredienz | V-DP.25 | V-DP.26 | DP.27 | DP.28 | DP.29 | DP.30 | DP.31 | DP.32 |
|---|---|---|---|---|---|---|---|---|
| (A.1) | | | 40 | 40 | 40 | 40 | 40 | 40 |
| (V-A.4) | 40 | 40 | | | | | | |
| (B.1-1) | | | 9 | 9 | 9 | | | |
| (B.1-2) | | | | | | 9 | 9 | 9 |
| (D.1) | | | 2 | | | 2 | | |
| (D.3) | | | | 2 | | | 2 | |
| (D.9) | | | | | 2 | | | 2 |
| P(E.1) | 20 | 20 | 20 | 20 | 20 | 20 | 20 | 20 |
| (G.1) | 40 | 40 | 40 | 40 | 40 | 40 | 40 | 40 |
| (G.2) | 5 | 5 | 5 | 5 | 5 | 5 | 5 | 5 |
| (G.3) | 1 | 1 | 1 | 1 | 1 | 1 | 1 | 1 |
| (G.5) | | 5 | | | | | | |
| NH₃ (25 Gew.-%) | 1 | 1 | 1 | 1 | 1 | 1 | 1 | 1 |

| | | | | | | | | |
|---|---|---|---|---|---|---|---|---|
| Alle Angaben in g/l, bezogen auf den jeweiligen Feststoff, lediglich die Angaben für Pigmentpräparation P(E.1) und die wässrige Ammoniaklösung sind tel quelle. | | | | | | | | |

**Tabelle 3 (Fortsetzung)**

| Ingredienz | V-DP.33 | V-DP.34 | DP.35 | DP.36 | DP.37 | DP.38 | DP.39 | DP.40 |
|---|---|---|---|---|---|---|---|---|
| (A.1) | | | 40 | 40 | 40 | 40 | 40 | 40 |
| (V-A.4) | 40 | 40 | | | | | | |
| (B.1-1) | | | 3 | 3 | 3 | | | |
| (B.1-2) | | | | | | 3 | 3 | 3 |
| (D.1) | | | 2 | | | 2 | | |
| (D.3) | | | | 2 | | | 2 | |
| (D.9) | | | | | 2 | | | 2 |
| P(E.1) | 20 | 20 | 20 | 20 | 20 | 20 | 20 | 20 |
| (G.1) | 40 | 40 | 40 | 40 | 40 | 40 | 40 | 40 |
| (G.2) | 5 | 5 | 5 | 5 | 5 | 5 | 5 | 5 |
| (G.3) | 1 | 1 | 1 | 1 | 1 | 1 | 1 | 1 |
| (G.5) | | 5 | | | | | | |
| NH₃ (25 Gew.-%) | 1 | 1 | 1 | 1 | 1 | 1 | 1 | 1 |

### III. Behandeln von Substraten

### III.1 Bedrucken von Baumwolle und Polyester-Textilien

### Drucksubstrate:

Baumwollgewebe, gebleicht, nicht merzerisiert, Flächengewicht 196 g/m² ("CO"), Baumwoll-Polyester-Mischgewebe ("CO/PES"), Gew.-Verhältnis 35:65, Flächengewicht 170 g/m², oder
Polyester-Stapelfasergewebe, Flächengewicht 220 g/m² ("PES")

### Drucken: Rakel 8 mm, Magnetzugstufe 6, Schablonengaze E 55

Thermische Behandlung: 2 Schritte, 1. Schritt: Trocknen: bei 80° C im Trockenschrank Der anschließende 2. Schritt der thermischen Behandlung (Vernetzung) erfolgte jeweils auf einem Spannrahmen mit Heißluft durch fünfminütiges Erhitzen auf 150 °C.

Der Graumaßstab wurde jeweils nach DIN 54001 (entspricht ISO 105 A02 für Farbtonänderung) bestimmt.

Keines der erfindungsgemäß bedruckten Substrate zeigte nachweisbare Emissionen an Formaldehyd (jeweils unter 3 ppm).

**Tabelle 4: Ergebnisse der Druckversuche**

| Druckpaste Nr. | Substrat Nr. | Echtheit | Substrat Nr. | Echtheit |
|---|---|---|---|---|
| V-DP.1 | V-CO.1 | 3 | V-PES.1 | 1 |
| DP.2 | CO.2 | 3 | PES.2 | 1-2 |
| DP.3 | CO.3 | 3 | PES.3 | 1-2 |
| DP.4 | CO.4 | 3 | PES.4 | 2 |
| DP.5 | CO.5 | 3 | PES.5 | 2 |
| DP.6 | CO.6 | 3-4 | PES.6 | 2 |
| V-DP.7 | V-CO.7 | 3 | V-PES.7 | 2 |
| DP.8 | CO.8 | 4 | PES.8 | 2 |
| DP.9 | CO.9 | 4 | PES.9 | 2 |
| DP.10 | CO.10 | 3-4 | PES.10 | 2 |
| DP.11 | CO.11 | 4 | PES.11 | 2 |
| DP.12 | CO.12 | 4 | PES.12 | 2 |
| DP.13 | CO.13 | 2-3 | PES.13 | 1-2 |
| DP.14 | CO.14 | 2 | PES.14 | 1-2 |
| DP.15 | CO.15 | 2 | PES.15 | 1-2 |
| DP.16 | CO.16 | 2 | PES.16 | 2 |
| DP.17 | CO.17 | 2-3 | PES.17 | 2 |
| DP.18 | CO.18 | 2-3 | PES.18 | 2 |
| DP.19 | CO.19 | 3 | PES.19 | 2 |
| DP.20 | CO.20 | 2-3 | PES.20 | 2 |
| DP.21 | CO.21 | 2-3 | PES.21 | 2 |
| DP.22 | CO.22 | 2-3 | PES.22 | 2 |
| DP.23 | CO.23 | 2-3 | PES.23 | 2 |
| DP.24 | CO.24 | 2-3 | PES.24 | 2 |

Unter Echtheit ist jeweils die Kochbürstwäsche zu verstehen. Zur Bestimmung der Kochbürstwäsche wurde wie folgt vorgegangen:

Bedrucktes Textil wurde mit einer wässrigen Lösung (Flottenverhältnis 1:20) von 1 g/l Marseiller Seife 60 min bei Kochtemperatur behandelt. Anschließend wurde das Textil ausgebreitet und mit 100 ml der noch heißen Waschflotte übergossen und mit einer Nagelbürste manuell 50 mal in jede Richtung (vor, zurück, rechts, links) mit einer Andruckkraft von ca. 500 g gerieben. Anschließend wurde mit kaltem Wasser gespült und das Textil getrocknet. Bewertet wurde die Aufhellung des Textils gemäß der ISO 105 A02.

**Tabelle 4a Ergebnisse von Druckversuchen**

| Druckpaste Nr. | Substrat Nr. | Echtheit | Formaldehyd [ppm] |
|---|---|---|---|
| V-DP.25 | V- CO/PES.25 | 2 | 54 |
| V-DP.26 | V-CO/PES.26 | 4 | 82 |
| DP.27 | CO/PES.27 | 3-4 | |
| DP.28 | CO/PES.28 | 3-4 | |
| DP.29 | CO/PES.29 | 3-4 | |
| DP.30 | CO/PES.30 | 4 | |
| DP.31 | CO/PES.31 | 4 | |
| DP.32 | CO/PES.32 | 4 | |
| V-DP.33 | V-CO.33 | 3 | 54 |
| V-DP.34 | V-CO.34 | 4-5 | 82 |
| DP.35 | CO.35 | 4-5 | |
| DP.36 | CO.36 | 4 | |
| DP.37 | CO.37 | 4-5 | |
| DP.38 | CO.38 | 4-5 | |
| DP.39 | CO.39 | 4 | |
| DP.40 | CO.40 | 4-5 | |

Keines der erfindungsgemäß bedruckten Substrate zeigte nachweisbare Emissionen an Formaldehyd.

### III.2 Färben von Textil

Nach Homogenisieren erfolgt der Auftrag mit Hilfe eines Foulards (Hersteller Fa. Mathis, Typ Nr. HVF12085), Anpressdruck der Walzen: 2 bar, verwendetes Gewebe: Polyester/Baumwolle 65/35; Flottenaufnahme betrug 60%
Trocknung: 80°C 10 min im Trockenschrank
Fixierung: 150°C, 5 Min Heißluft

Man erhielt erfindungsgemäßes gefärbtes Textil PES-F.2 bzw. Vergleichstextil V-PES-F.1.

### Ergebnis:

Erfindungsgemäßes gefärbtes Textil PES/CO-F.2 und Vergleichstextil V-PES/CO-F.1 wiesen identisches Echtheitsniveau auf (Kochbürstwäsche). Der Formaldehyd-Gehalt von V-PES/CO-F.1 betrug 35 ppm, der Formaldehyd-Gehalt von PES/CO-F.2 lag unterhalb der Nachweisgrenze (≤ 3 ppm).

### III.3 Wasserdichtbeschichtung von Textil

**Tabelle 5: Beschichtungsmittel**

| Ingredienz | [g] |
|---|---|
| Wasser | 12 |
| (G.3) | 2 |
| (G.2) | 4 |
| (G.5) | 2 |
| (A.1) | 360 |
| (C.1) | 60 |
| (D.1) | 2 |
| Ammoniak | 1 |
| (G.1) | 16 |

### Substrate:

Baumwollgewebe, gebleicht, nicht merzerisiert, Flächengewicht 196 g/m² ("BW") oder Polyester-Stapelfasergewebe, Flächengewicht 220 g/m² ("PES")

### Beschichten: jeweils Rakel 8 mm, Magnetzugstufe 6, Schablonengaze E 55

Man trug eine Lage Beschichtungsmittel aus II.3 auf, danach trocknete man 3 Minuten bei 100°C in einem Trockenschrank. Nach dem ersten Auftrag und dem Trocknen betrug die Auflage 45 g/m². Danach kalanderte man bei Raumtemperatur mit einer Belastung von 3 Tonnen. Danach fixierte man 3 Minuten bei 150°C.
Danach trug man eine zweite Lage Beschichtungsmittel aus II.3 auf, danach trocknete man 3 Minuten bei 100°C in einem Trockenschrank. Nach dem zweiten Auftrag und dem Trocknen betrug die Auflage 60 g/m². Danach kalanderte man bei Raumtemperatur mit einer Belastung von 3 Tonnen. Danach fixierte man 3 Minuten bei 150°C.

Die Beschichtung wurde auf Effizienz geprüft, indem man die resultierende Wassersäule bestimmte. Die resultierende Wassersäule betrug > 5 m.
Der Formaldehydgehalt lag jeweils unterhalb der Nachweisgrenze.

Die resultierende Wassersäule wurde bestimmt, indem man den Wasserdruck bestimmte, bei dem die ersten drei Tropfen durch die Beschichtung hindurchtraten. Dazu wurde das beschichtete Textil mit der beschichteten Seite zur Wassersäule hin dichtend auf ein Prüfwasserrohr gespannt und der Wasserdruck kontinuierlich erhöht. Der Druck wurde mittels einer Pumpe erzeugt und gemessen.

### III.4 Blackout-Beschichtung von Textil

### Substrate:

Badmwollgewebe, gebleicht, nicht merzerisiert, Flächengewicht 196 g/m² ("BW") oder Polyester-Stapelfasergewebe, Flächengewicht 220 g/m² ("PES")

**Tabelle 6: Zusammensetzung von erfindungsgemäßen Blackout-Beschichtungsmitteln (Mengen der Ingredienzien in g)**

| Ingredienz | Grundstrich | Mittelstrich | Topstrich |
|---|---|---|---|
| Wasser | 45 | 45 | 45 |
| (G.2) | 5 | 5 | 3 |
| (G.6) | 20 | 20 | 20 |
| Kaolin (Füllstoff) | 100 | 100 | 85 |
| (A.1) | 272 | 272 | 264 |
| (C.1) | 60 | 60 | 60 |
| Titandioxid (F.1) | 35 | 35 | 49 |
| Ruß (F.2) | | 12 | |
| Ammoniak | pH-Wert 8 einstellen | pH-Wert 8 einstellen | pH-Wert 8 einstellen |
| (D.1) | 27 | 27 | 27 |
| (G.2) | 3 | 3 | 3 |
| Ammoniumstearat | 33 | 33 | 33 |

Die Auftragung erfolgte mittels eines Luftrakels. Die Auftragsschichtdicke entsprach jeweils 0,4 mm. Nach jedem Strich wurde 3 min bei 100°C getrocknet, mit 3 t bei Zimmertemperatur kalandert und anschließend 2 min bei 160°C fixiert. Jeder Strich wurde 2 mal aufgetragen.

Lichttransmission des erfindungsgemäß beschichteten Textils : < 0,01 %, gemessen im Wellenlängenbereich von 400 nm bis 780 nm mittels VIS Spektroskopie. Mikroskopisch wurden keine Störungen der Beschichtung, z.B. Pinholes (erkennbar durch helle Punkte im Durchlicht) beobachtet. Die Beschichtung wies eine hohe Reibechtheit von 4 (trocken) auf.

### III.5 Beschichten von Textil mit Mikrokapselmaterialien

Mikrokapselmaterial (H.1) wurde wie folgt hergestellt:
Mischung III.5.1.1 (als Wasserphase)

| | |
|---|---|
| 1303,65 kg | Wasser |
| 664,3 kg | 5 Gew.-% wässrige Dispersion von Methylhydroxypropylcellulose (kommerziell erhältlich als Culminal® MHPC 100) |
| 166,1 kg | Polyvinylalkohol (partiell verseiftes Polyvinylacetat) als 10 Gew.-% wässrige Lösung, Viskosität: 15 mPa·s nach DIN 53015 (gemessen als 4 Gew.-% wässrige Lösung bei 20°C), Verseifungszahl nach DIN 53401: 200 mg KOH/g, kommerziell erhältlich als Mowiol® 15-79 |
| 7,33 kg | 2,5 Gew.-% wässrige Na-Nitritlösung |

Mischung III.5.1.2 (als Ölphase)

| | |
|---|---|
| 1506,65 kg | techn. n-Octadecan, (96 % Reinheit) |
| 31,46 kg | Paraffin mit einem Erstarrungspunkt von 66 bis 70°C, kinematische Viskosität bei 100°C: 7 mm²/s, kommerziell erhältlich als Sasolwax® 6805 |
| 68,5 kg | Methylmethacrylat |
| 68,5 kg | 1,4-Butandioldiacrylat |
| 34,3 kg | Methacrylsäure |
| 2,45 kg | 75 Gew.-% Lösung von tert-Butylperpivalat in aliphatischen Kohlenwasserstoffen |

Mischung III.5.1.3

| | |
|---|---|
| 15,0 kg | 25 Gew.-% wässrige Lösung von NaOH, verdünnt mit weiteren 5 kg Wasser |

Man legte Mischung III.5.1.1 vor und erwärmte auf 40 °C. Dann gab man Mischung III.5.1.2 zu und dispergierte mit einem Rotor/Stator-Dispergator so lange, bis man eine stabile Emulsion mit einem mittleren Tröpfchendurchmesser D[4,3] = 3,9 µm Durchmesser erhielt. Die so erhaltene Emulsion wurde unter Rühren mit einem Ankerrührer über einen Zeitraum von 60 Minuten auf eine Temperatur von 70°C erwärmt, über weitere 60 Minuten auf eine Temperatur von 85 °C erwärmt und eine weitere Stunde bei 85°C gerührt. Man gab innerhalb von 10 Minuten 18,8 kg einer 10 Gew.-% wässrigen tert-Butylhydroperoxidlösung zu. Die Heizung wurde abgeschaltet. Zu der so entstandenen Mikrokapseldispersion wurde unter Rühren innerhalb von 80 Minuten 98,9 kg einer 1,1 Gew.-% wässrigen Ascorbinsäurelösung zugefügt und dabei auf 20°C gekühlt. Man rührte weitere 20 Minuten bei 20°C. Mit Mischung III.5.1.3 wurde ein pH-Wert von 7 eingestellt. Man rührte weitere 20 Minuten bei 20°C, gab 17,6 kg einer 30 Gew.-% wässrigen Lösung von Polyacrylsäure (partiell neutralisiert mit NaOH, pH-Wert 3,5, Viskosität nach Brookfield bei 20°C: 5 mPa·s) als Verdicker (kommerziell erhältlich als Viscalex® HV 30) zu und rührte weitere 20 Minuten bei 20°C.
Man erhielt eine wässrige Dispersion von Mikrokapselmaterial (H.1).

Die entstandene wässrige Dispersion von Mikrokapselmaterial (H.1) besaß einen Feststoffgehalt von 44 % und eine mittlere Teilchengröße D[4,3] = 4,1 µm (gemessen mit Fraunhoferbeugung).

### (H.2) wurde wie folgt hergestellt:

Man bereitete die folgenden Mischungen:
Mischung III.5.2.1, als Wasserphase

| | |
|---|---|
| 425 g | Wasser |
| 412 g | Polyvinylalkohol (partiell verseiftes Polyvinylacetat) als 10 Gew.-% wässrige Lösung, Viskosität: 40 mPa·s nach DIN 53015 (gemessen als 4 Gew.-% wässrige Lösung bei 20°C), Verseifungszahl: 140 mg KOH/g, bestimmt nach DIN 53401, kommerziell erhältlich als Mowiol® 40-88 |
| 2,1 g | 2,5 Gew.-% wässrige Natriumnitritlösung |

Mischung III.5.2.2, als Ölphase

| | |
|---|---|
| 431 g | techn. n-Octadecan, (Reinheitsgrad 91%) |
| 9 g | Paraffin mit einem Erstarrungspunkt von 66 bis 70°C, kinematische Viskosität bei 100°C: 7 mm²/s, kommerziell erhältlich als Sasolwax® 6805 |
| 50,4 g | Methylmethacrylat |
| 19,4 g | 1,4-Butandioldiacrylat |
| 7,8 g | Methacrylsäure |
| 0,76 g | 2-Ethylhexylthioglycolat |
| 0,7 g | 75 Gew.-% Lösung von tert-Butylperpivalat in aliphatischen Kohlenwasserstoffen |

Mischung III.5.2.3

| | |
|---|---|
| 1,00 g | 25 Gew.-% wässrige Natronlauge, verdünnt mit 1,43 gWasser |

Man legte Mischung III.5.2.1 vor und erwärmte auf 40 °C. Dann gab man Mischung III.5.2.2 zu und dispergierte mit einem schnelllaufenden Dissolverrührer bei 6000 Upm über einen Zeitraum von 40 Minuten. Es wurde eine stabile Emulsion der mittleren Teilchengröße D[4,3]=1,96 µm Durchmesser erhalten. Die so erhaltene Emulsion wurde unter Rühren mit einem Ankerrührer über einen Zeitraum von 60 Minuten auf eine Temperatur von 70°C erwärmt, über weitere 60 Minuten auf eine Temperatur von 85 °C erwärmt und eine weitere Stunde bei 85°C gerührt. Man gab innerhalb von 10 Minuten 5,4 g einer 10 Gew.-% wässrigen tert-Butylhydroperoxidlösung zu. Die Heizung wurde abgeschaltet. Zu der so entstandenen Mikrokapseldispersion wurde unter Rühren innerhalb von 30 Minuten 28,3 g einer 1,1 Gew.-% wässrigen Ascorbinsäurelösung zugefügt und dabei auf 20°C gekühlt. Mit Mischung III.5.2.3 wurde ein pH-Wert von 7 eingestellt. Man erhielt eine wässrige Dispersion von Mikrokapselmaterial (H.2).

Die entstandene wässrige Dispersion von Mikrokapselmaterial (H.2) besaß einen Feststoffgehalt von 40 % und eine mittlere Teilchengröße D[4,3] = 2,17 µm (gemessen mit Fraunhoferbeugung), D(0,9) = 2,64 µm, die Halbwertsbreite der Verteilung betrug 0,58 µm, der Span 0,42, die Abdampfrate betrug 21,4%.

Zur Herstellung von erfindungsgemäßen Druckpasten, die Mikrokapselmaterial (H.1) bzw. (H.2 enthielten, ging man wie folgt vor:

Man legte 200 ml Wasser vor und gab gegebenenfalls Emulgator (G.2) zu. Wenn der pH-Wert unter 8 lag, stellte man einen pH-Wert von 8,5 durch Zugabe von 25 Gew.-% wässrigen Ammoniak ein. Unter Rühren gab man anschließend (B.1-1), Mikrokapselmaterial (H.1) oder (H.2) sowie Bindemittel (A.1) gemäß Tabelle 7 zu. Anschließend gab man unter Rühren (G.1), gegebenenfalls weitere Hilfsstoffe und schließlich (G.1) zu. Man füllte mit Wasser auf einen Liter auf und verrührte danach 15 Minuten mit einem Schnellrührer des Typs Ultra-Turrax mit etwa 6000 Umdrehungen/min.

Man erhielt erfindungsgemäße Pasten gemäß Tabelle 7.

**Tabelle 7: Zusammensetzung von erfindungsgemäßen Pasten, die Mikrokapselmateriälien enthalten (Mengen der Ingredienzien in g)**

| Produkt | Paste III.5.1 (DP.41) | Paste III.5.2 (DP.42) |
|---|---|---|
| (H.1) | 500 | - |
| (H.2) | - | 500 |
| (A.1) | 400 | 400 |
| (B.1-1) | 15 | 15 |
| (G.1) | 30 | 30 |
| (G.2) | 5 | 5 |
| (G.4) | 1 | 1 |
| Wasser | Auffüllen auf 1000 ml | Auffüllen auf 1000 ml |

Die Mengenangaben von (H.1) und (H.2) sind tell qu'elle.

Bedrucken von Textil mit erfindungsgemäßen Pasten DP.41 bzw. DP.42:

Man ging jeweils aus von Baumwollgewebe, gebleicht, nicht merzerisiert, Flächengewicht 196 g/m² ("BW").

Drucken: Rakel 8 mm, Magnetzugstufe 6, Schablonengaze E 55
Thermische Behandlung: 2 Schritte, 1. Schritt: Trocknen: bei 80° C im Trockenschrank Der anschließende 2. Schritt der thermischen Behandlung (Vernetzung) erfolgte jeweils auf einem Spannrahmen mit Heißluft durch fünfminütiges Erhitzen auf 150 °C.

Man erhielt erfindungsgemäße bedruckte Baumwolle BW.41 bzw. BW.42 mit "kühlem" Griff, d.h., die erfindungsgemäß bedruckte Baumwolle fühlte sich kühl an.

Beschichtung von Textil mit erfindungsgemäßen Pasten DP.41 bzw. DP.42:

Man ging jeweils aus von Baumwollgewebe, gebleicht, nicht merzerisiert, Flächengewicht 196 g/m² ("BW").

Beschichten: jeweils Rakel 8 mm, Magnetzugstufe 6, Schablonengaze E 55

Man trug eine Lage erfindungsgemäße Paste DP.41 bzw. DP.42 auf, danach trocknete man 3 Minuten bei 100°C in einem Trockenschrank. Nach dem ersten Auftrag und dem Trocknen betrug die Auflage 45 g/m². Danach kalanderte man bei Raumtemperatur mit einer Belastung von 3 Tonnen. Danach fixierte man 3 Minuten bei 150°C. Danach trug man eine zweite Lage erfindungsgemäße Paste DP.41 bzw. DP.42 auf, danach trocknete man 3 Minuten bei 100°C in einem Trockenschrank. Nach dem zweiten Auftrag und dem Trocknen betrug die Auflage 60 g/m². Danach kalanderte man bei Raumtemperatur mit einer Belastung von 3 Tonnen. Danach fixierte man 3 Minuten bei 150°C.

Man erhielt erfindungsgemäße beschichtete Baumwolle BW.41 a bzw. BW.42a mit "kühlem" Griff, d.h., die erfindungsgemäß beschichtete Baumwolle fühlte sich kühl an.

## Patentansprüche

1. Verfahren zum Behandeln von textilen Substraten, **dadurch gekennzeichnet, dass** man mindestens eine wässrige Formulierung einsetzt, die enthält
(A) mindestens ein Bindemittel auf Acrylatbasis, das keine Comonomere einpolymerisiert enthält, die bei Einwirkung von Temperaturen im Bereich von 100 bis 250°C pro Mol ein Äquivalent Formaldehyd abspalten können,
(B) mindestens ein Umsetzungsprodukt von mindestens einem polymerem Carbodiimid (C) mit mindestens einem Diol, Triol oder Polyol (D), oder
(C) mindestens ein polymeres Carbodiimid und
(D) mindestens ein Diol, Triol oder Polyol.

2. Verfahren nach Anspruch 1, **dadurch gekennzeichnet, dass** es sich bei dem Behandeln um ein Bedrucken, Färben oder Beschichten handelt.

3. Verfahren nach Anspruch 1 oder 2, **dadurch gekennzeichnet, dass** es sich bei der wässrigen Formulierung um eine Druckpaste handelt.

4. Verfahren nach einem der Ansprüche 1 bis 3, **dadurch gekennzeichnet, dass** die betreffende wässrige Formulierung weiterhin
(E) mindestens ein Pigment
enthält.

5. Verfahren nach einem der Ansprüche 1 bis 4, **dadurch gekennzeichnet, dass** man im Anschluss an das Behandeln mit wässriger Formulierung thermisch behandelt.

6. Verfahren nach einem der Ansprüche 1 bis 5, **dadurch gekennzeichnet, dass** textile Substrate gewählt werden aus flächigen Substraten aus Baumwolle, Polyester und Polyolefinen.

7. Verfahren nach einem der Ansprüche 1 bis 6, **dadurch gekennzeichnet, dass** Bindemittel (A) gewählt wird aus Copolymeren, die als Comonomer (Meth)-acrylsäure, Glycidyl(meth)acrylat oder ein C₂-C₁₀-Hydroxyalkyl(meth)-acrylat einpolymerisiert enthalten.

8. Verfahren nach einem der Ansprüche 1 bis 7, **dadurch gekennzeichnet, dass** es sich bei polymerem Carbodiimid (C) um ein polymeres Carbodiimid auf Basis von m-TMXDI oder p-TMXDI handelt.

9. Verfahren nach einem der Ansprüche 1 bis 8, **dadurch gekennzeichnet, dass** man mindestens ein Umsetzungsprodukt (B) von mindestens einem polymeren Carbodiimid (C) mit mindestens einem Diol, Triol oder Polyol (D) einsetzt, das durch Umsetzung von mindestens einem Isocyanatgruppen-haltigen polymeren Carbodiimid mit Diethylenglykol, Triethylenglykol, Tetraethylenglykol oder Polyethylenglykol erhältlich ist.

10. Verfahren nach einem der Ansprüche 1 bis 9, **dadurch gekennzeichnet**, die betreffende wässrige Formulierung weiterhin
(H) mindestens ein Mikrokapselmaterial
enthält.

11. Wässrige Formulierungen, enthaltend
(A) mindestens ein Bindemittel auf Acrylatbasis, das keine Comonomere einpolymerisiert enthält, die bei Einwirkung von Temperaturen im Bereich von 100 bis 250°C pro Mol ein Äquivalent Formaldehyd abspalten können,
(B) mindestens ein Umsetzungsprodukt von mindestens einem polymerem Carbodiimid (C), das mindestens eine endständige Gruppe aufweist, gewählt aus Carbonsäuregruppen und Isocyanatgruppen, mit mindestens einem Diol, Triol oder Polyol (D), oder
(C) mindestens ein polymeres Carbodiimid, das mindestens eine endständige Gruppe aufweist, gewählt aus Carbonsäuregruppen und Isocyanatgruppen,und
(D) mindestens ein Diol, Triol oder Polyol.

12. Wässrige Formulierungen nach Anspruch 11, **dadurch gekennzeichnet, dass** es sich bei ihnen um Druckpasten handelt.

13. Wässrige Formulierungen nach Anspruch 11 oder 12, **dadurch gekennzeichnet, dass** sie weiterhin
(E) mindestens ein Pigment
enthalten.

14. Wässrige Formulierungen nach einem der Ansprüche 11 bis 13, **dadurch gekennzeichnet, dass** Bindemittel (A) gewählt wird aus Copolymeren, die als Comonomer (Meth)acrylsäure, Glycidyl(meth)acrylat oder ein C₂-C₁₀-Hydroxyalkyl(meth)acrylat einpolymerisiert enthalten.

15. Wässrige Formulierungen nach einem der Ansprüche 11 bis 14, **dadurch gekennzeichnet, dass** es sich bei sich bei polymerem Carbodiimid (C) um ein polymeres Carbodiimid auf Basis von m-TMXDI oder p-TMXDI handelt.

16. Wässrige Formulierungen nach einem der Ansprüche 11 bis 15, **dadurch gekennzeichnet, dass** sie
(H) mindestens ein Mikrokapselmaterial
enthalten.

17. Verfahren zur Herstellung von wässrigen Formulierungen nach einem der Ansprüche 11 bis 16 durch Vermischen von
(A) mindestens einem Bindemittel auf Acrylatbasis, das keine Comonomere einpolymerisiert enthält, die bei Einwirkung von Temperaturen im Bereich von 100 bis 250°C pro Mol ein Äquivalent Formaldehyd abspalten können,
(B) mindestens ein Umsetzungsprodukt von mindestens einem polymerem Carbodiimid (C), das mindestens eine endständige Gruppe aufweist, gewählt aus Carbonsäuregruppen und Isocyanatgruppen, mit mindestens einem Diol, Triol oder Polyol (D), oder
(C) mindestens ein polymeres Carbodiimid, das mindestens eine endständige Gruppe aufweist, gewählt aus Carbonsäuregruppen und Isocyanatgruppen, und
(D) mindestens ein Diol, Triol oder Polyol,
(E) gegebenenfalls mindestens einem Pigment,
(F) gegebenenfalls mindestens einem Wirkstoff,
(G) gegebenenfalls mindestens einem Hilfsstoff
(H) gegebenenfalls mindestens ein Mikrokapselmaterial
und gegebenenfalls Auffüllen mit Wasser.

18. Textile Substrate, bedruckt nach einem Verfahren nach einem der Ansprüche 1 bis 11.

## Claims

1. A process for treating a textile substrate, which process comprises utilizing at least one aqueous formulation comprising
(A) at least one acrylate-based binder without interpolymerization of any comonomer capable of detaching, per mole, one equivalent of formaldehyde on exposure to a temperature in the range from 100 to 250°C,
(B) at least one reaction product of at least one polymeric carbodiimide (C) with at least one diol, triol or polyol (D), or
(C) at least one polymeric carbodiimide and
(D) at least one diol, triol or polyol.

2. The process according to claim 1 wherein the treating comprises printing, dyeing or coating.

3. The process according to claim 1 or 2 wherein the aqueous formulation comprises a print paste.

4. The process according to any one of claims 1 to 3 wherein the aqueous formulation in question further comprises
(E) at least one pigment.

5. The process according to any one of claims 1 to 4 wherein the treating with aqueous formulation is followed by thermal treating.

6. The process according to any one of claims 1 to 5 wherein textile substrates are chosen from sheetlike substrates composed of cotton, polyester and polyolefins.

7. The process according to any one of claims 1 to 6 wherein binder (A) is selected from copolymers comprising (meth)acrylic acid, glycidyl (meth)acrylate or a C₂-C₁₀-hydroxyalkyl (meth)acrylate as interpolymerized comonomer.

8. The process according to any one of claims 1 to 7 wherein polymeric carbodiimide (C) comprises a polymeric carbodiimide based on m-TMXDI or p-TMXDI.

9. The process according to any one of claims 1 to 8 wherein at least one reaction product (B) of at least one polymeric carbodiimide (C) with at least one diol, triol or polyol (D) is obtainable by reaction of at least one isocyanato-containing polymeric carbodiimide with diethylene glycol, triethylene glycol, tetraethylene glycol or polyethylene glycol.

10. The process according to any one of claims 1 to 9 wherein the aqueous formulation in question further comprises
(H) at least one microcapsule material.

11. An aqueous formulation comprising
(A) at least one acrylate-based binder without interpolymerization of any comonomer capable of detaching, per mole, one equivalent of formaldehyde on exposure to a temperature in the range from 100 to 250°C,
(B) at least one reaction product of at least one polymeric carbodiimide (C) which has at least one terminal group selected from carboxylic acid groups and isocyanate groups, with at least one diol, triol or polyol (D), or
(C) at least one polymeric carbodiimide which has at least one terminal group selected from carboxylic acid groups and isocyanate groups, and
(D) at least one diol, triol or polyol.

12. The aqueous formulation according to claim 11 comprising a print paste.

13. The aqueous formulation according to claim 11 or 12 further comprising
(E) at least one pigment.

14. The aqueous formulation according to any one of claims 11 to 13 wherein binder (A) is selected from copolymers comprising (meth)acrylic acid, glycidyl (meth)acrylate or a C₂-C₁₀-hydroxyalkyl (meth)acrylate as interpolymerized comonomer.

15. The aqueous formulation according to any one of claims 11 to 14 wherein polymeric carbodiimide (C) comprises a polymeric carbodiimide based on m-TMXDI or p-TMXDI.

16. The aqueous formulation according to any one of claims 11 to 15 comprising (H) at least one microcapsule material.

17. A process for producing an aqueous formulation according to any one of claims 11 to 16 by mixing together
(A) at least one acrylate-based binder without interpolymerization of any comonomer capable of detaching, per mole, one equivalent of formaldehyde on exposure to a temperature in the range from 100 to 250°C,
(B) at least one reaction product of at least one polymeric carbodiimide (C) which has at least one terminal group selected from carboxylic acid groups and isocyanate groups, with at least one diol, triol or polyol (D), or
(C) at least one polymeric carbodiimide which has at least one terminal group selected from carboxylic acid groups and isocyanate groups and
(D) at least one diol, triol or polyol,
(E) optionally at least one pigment,
(F) optionally at least one active component,
(G) optionally at least one auxiliary component,
(H) optionally at least one microcapsule material, and if appropriate making up the volume with water.

18. A textile substrate printed by a process according to any one of claims 1 to 11.

## Revendications

1. Procédé de traitement de substrats textiles, **caractérisé en ce qu'**au moins une formulation aqueuse est utilisée, qui contient :
(A) au moins un liant à base d'acrylate, qui ne contient aucun comonomère copolymérisé qui, sous l'effet de températures dans la plage allant de 100 à 250 °C, peut éliminer un équivalent de formaldéhyde par mole,
(B) au moins un produit de réaction d'au moins un carbodiimide polymère (C) avec au moins un diol, triol ou polyol (D), ou
(C) au moins un carbodiimide polymère et
(D) au moins un diol, triol ou polyol.

2. Procédé selon la revendication 1, **caractérisé en ce que** le traitement est une impression, une coloration ou un revêtement.

3. Procédé selon la revendication 1 ou 2, **caractérisé en ce que** la formulation aqueuse est une pâte d'impression.

4. Procédé selon l'une quelconque des revendications 1 à 3, **caractérisé en ce que** la formulation aqueuse en question contient également
(E) au moins un pigment.

5. Procédé selon l'une quelconque des revendications 1 à 4, **caractérisé en ce qu'**un traitement thermique est effectué après le traitement avec une formulation aqueuse.

6. Procédé selon l'une quelconque des revendications 1 à 5, **caractérisé en ce que** les substrats textiles sont choisis parmi les substrats plats en coton, polyester et polyoléfines.

7. Procédé selon l'une quelconque des revendications 1 à 6, **caractérisé en ce que** le liant (A) est choisi parmi les copolymères qui contiennent en tant que comonomère de l'acide (méth)acrylique, du (méth)acrylate de glycidyle ou un (méth)acrylate d'hydroxyalkyle en C₂-C₁₀ copolymérisé.

8. Procédé selon l'une quelconque des revendications 1 à 7, **caractérisé en ce que** le carbodiimide polymère (C) est un carbodiimide polymère à base de m-TMXDI ou p-TMXDI.

9. Procédé selon l'une quelconque des revendications 1 à 8, **caractérisé en ce qu'**au moins un produit de réaction (B) d'au moins un carbodiimide polymère (C) avec au moins un diol, triol ou polyol (D) est utilisé, qui peut être obtenu par réaction d'au moins un carbodiimide polymère contenant des groupes isocyanate avec du diéthylène glycol, du triéthylène glycol, du tétraéthylène glycol ou du polyéthylène glycol.

10. Procédé selon l'une quelconque des revendications 1 à 9, **caractérisé en ce que** la formulation aqueuse en question contient également
(H) au moins un matériau de microcapsule.

11. Formulations aqueuses, contenant
(A) au moins un liant à base d'acrylate, qui ne contient aucun comonomère copolymérisé qui, sous l'effet de températures dans la plage allant de 100 à 250 °C, peut éliminer un équivalent de formaldéhyde par mole,
(B) au moins un produit de réaction d'au moins un carbodiimide polymère (C), qui comprend au moins un groupe terminal choisi parmi les groupes acide carboxylique et les groupes isocyanate, avec au moins un diol, triol ou polyol (D), ou
(C) au moins un carbodiimide polymère, qui comprend au moins un groupe terminal choisi parmi les groupes acide carboxylique et les groupes isocyanate, et
(D) au moins un diol, triol ou polyol.

12. Formulations aqueuses selon la revendication 11, **caractérisées en ce que** celles-ci sont des pâtes d'impression.

13. Formulations aqueuses selon la revendication 11 ou 12, **caractérisées en ce qu'**elles contiennent également
(E) au moins un pigment.

14. Formulations aqueuses selon l'une quelconque des revendications 11 à 13, **caractérisées en ce que** le liant (A) est choisi parmi les copolymères qui contiennent en tant que comonomère de l'acide (méth)acrylique, du (méth)acrylate de glycidyle ou un (méth)acrylate d'hydroxyalkyle en C₂-C₁₀ copolymérisé.

15. Formulations aqueuses selon l'une quelconque des revendications 11 à 14, **caractérisées en ce que** le carbodiimide polymère (C) est un carbodiimide polymère à base de m-TMXDI ou p-TMXDI.

16. Formulations aqueuses selon l'une quelconque des revendications 11 à 15, **caractérisées en ce qu'**elles contiennent également
(H) au moins un matériau de microcapsule.

17. Procédé de fabrication de formulations aqueuses selon l'une quelconque des revendications 11 à 16, par mélange de
(A) au moins un liant à base d'acrylate, qui ne contient aucun comonomère copolymérisé qui, sous l'effet de températures dans la plage allant de 100 à 250 °C, peut éliminer un équivalent de formaldéhyde par mole,
(B) au moins un produit de réaction d'au moins un carbodiimide polymère (C), qui comprend au moins un groupe terminal choisi parmi les groupes acide carboxylique et les groupes isocyanate, avec au moins un diol, triol ou polyol (D), ou
(C) au moins un carbodiimide polymère, qui comprend au moins un groupe terminal choisi parmi les groupes acide carboxylique et les groupes isocyanate, et
(D) au moins un diol, triol ou polyol,
(E) éventuellement au moins un pigment,
(F) éventuellement au moins une substance active,
(G) éventuellement au moins un adjuvant,
(H) éventuellement au moins un matériau de microcapsule et éventuellement remplissage avec de l'eau.

18. Substrats textiles, imprimés par un procédé selon l'une quelconque des revendications 1 à 11.
